# EUROPEAN PATENT SPECIFICATION

(11) **EP 0 637 907 B1**
(45) Date of publication and mention of the grant of the patent: **04.06.1997**
(21) Application number: 92924932.4
(22) Date of filing: 13.11.1992
(51) Int. Cl.: A01K 1/01, A01K 1/00, A01C 3/00, A01C 3/02, B30B 11/24

(54) **ENVIRONMENT-FRIENDLY AND ENERGY SAVING ANIMAL STABLE FOR INSTANCE FOR PIGS**
UMWELTFREUNDLICHER UND ENERGIESPARENDER STALL FÜR TIERE, ZUM BEISPIEL FÜR SCHWEINE
LOGEMENT ANIMALIER, PAR EXEMPLE POUR PORCS, PERMETTANT DES ECONOMIES D'ENERGIE SANS NUIRE A L'ENVIRONNEMENT

(30) Priority: 27.04.1992 NL 9200763
(43) Date of publication of application: 15.02.1995
(73) Proprietor: DE CORTE, Dominicus Marinus Johannes, NL-5725 RE Asten (NL)
(72) Inventor: DE CORTE, Dominicus Marinus Johannes, NL-5725 RE Asten (NL)
(74) Representative: Van Someren, Petronella F. H. M.
(86) International application number: NL9200204
(87) International publication number: WO9321758

(56) References cited:
- EP-A- 0 051 941
- WO-A-86/06461
- DE-A- 1 604 163
- DE-A- 2 602 085
- DE-A- 3 003 562
- DE-A- 3 405 124
- DE-C- 88 911
- NL-A- 7 908 636
- NL-A- 8 601 185
- NL-A- 8 802 843
- NL-A- 8 901 220
- US-A- 3 955 536
- US-A- 4 121 539
- EICHHOLZ ANLAGENBAU 'SCHWEINEZUCHT-UND MASTSTALLEINRICHTUNG' 1988 , EICHHOLZ ANLAGEBAU , SCHAPEN (DE)

## Description

The invention relates to a method for treating discharge air from an animal shed and processing washing liquid. The invention further relates to an animal shed, for instance for pigs, comprising at least one accommodation area with at least one stall for the animals, which stall communicates by means of a grid in the floor of the stall with a manure collection space in which a layer of washing liquid is contained. The invention thus relates to an integrated farm for husbanding animals and for processing manure coming from the animals, in addition to a method for treating and/or processing manure excreted by animals.

In a typical embodiment of an animal shed, for instance for pigs, a main or central pathway is usually present which gives access via doors to a number of accommodation areas for the animals located transversely of this pathway. Situated in each of these accommodation areas is a substantial number of adjacently located stalls for one or a number of animals. Lying along these stalls is usually a working passage, for instance for feeding the animals.

The excess of manure produced in such often large-scale farm buildings for breeding and fattening for instance pigs represents a great impact on the environment. The manure causes a two-fold problem.

On the one hand there is the emission of harmful substances such as ammonia from the animal shed itself. These substances have an impact on the environment because they directly or indirectly cause air pollution and acid rain and also disseminate an unpleasant odour.

On the other hand the processing of the liquid manure is becoming an increasing objection; manure processing plants do not have the capacity to process the large quantities of liquid manure produced. The processing is moreover quite costly. A possible alternative here is the spreading of liquid manure on farmland. This is however subject to legal restrictions intended to prevent environmental pollution. The large volume which cannot be entirely processed or spread results in a surplus of liquid manure with a great environmental impact which no-one knows how to deal with, whereas manure in suitable form, for instance pellets, can in essence be a useful product, with the advantage that it can be transported in suitable manner to locations where there is a shortage of manure.

It is important to find a method which provides the possibility of a substantial, environmentally-friendly reduction of the liquid manure volume and thus also of the surplus problem and which can also result in the reducing of emission of harmful substances, namely ammonia, from the farm building.

Sheds are already known wherein it is the object to counter ammonia emission by providing in the shed a space with a quantity of washing liquid on the ground. The manure falls into the washing liquid and is removed periodically, for instance once a day, together with this washing liquid. After a short time, however, the washing liquid no longer contains any of the oxygen needed for binding of the ammonia. Due to over-saturation of the washing liquid with ammonium ions ammonia does still escape from the washing liquid with the adverse results for the environment consequent thereon.

It is also known to discharge the manure periodically, for instance once a day, to a storage site and there to partially evaporate the thin fraction in the outside air. It is virtually unavoidable herein that harmful substances will be released, both before and during discharge of the manure to the storage site and during evaporation, so that pollution of the environment nevertheless occurs.

It is further per se known to supply oxygen to the thin fraction of manure by means of a cascade aerator in order to convert ammonia into nitrate. The effect of this aerator, wherein surplus washing liquid falls downward out of one tank into another tank, is however small; this has not found a follow-up in practice.

A more fundamental approach is required to obtain animal sheds which comply with the increasingly great demands in respect of the environment.

The invention has inter alia for its object to provide an animal shed, for instance for pigs, which can be provided with means allowing a particularly effective functional integration for obtaining an environmentally-friendly shed with which the volume of liquid manure and the emission into the atmosphere of harmful substances such as ammonia can be reduced to a substantial degree, and wherein the option can also be included of realizing the processing of liquid manure to manure pellet or to a useful intermediate product in an environmentally responsible manner, preferably in the animal shed itself.

The invention further has for its object to provide the possibility of adapting an animal shed such that the energy consumption is limited to an as small as possible extent, wherein energy saving is also achieved by making use of heat coming for instance from the animals, so that a significant cost saving can be achieved.

According to a first aspect of the invention, means are present in a shed as stated in the preamble for bringing air present in the farm building into intimate contact with washing liquid.

Bringing air into intimate contact with washing liquid could for instance be realized by feeding air from the animal shed through a dense curtain of falling liquid, for instance to clean the air.

In an important embodiment of the invention, which is simple of realization and requires little energy for through-feed of air, the means however contain a spray device for washing liquid which brings the washing liquid in finely divided state into intimate contact with air. The spray means are located outside the stall.

It was already disclosed in NL-A-8901220 to clean the grid of a stall by means of spray nozzles. In this case the spray nozzles are located immediately above the grid in the stall. In the present invention this localization is different and may be any place outside the stall.

The intimate mixing, and this applies particularly in the case of mixing using a spray device, offers various important application options for an animal shed within the scope of the invention.

Use can therein be made of the possibilities, particularly when a spray device is used, of achieving: cleaning of the shed air of ammonia and dust particles, absorption of oxygen in the liquid droplets, substantial evaporation of the washing liquid, and an energy exchange between the washing liquid and the air, which occur to an increased extent during through-feed of air. The spray device moreover offers the possibility of supplying the washing liquid over a range of easily adjustable breadth, for instance by modifying the feed pressure of the liquid.

By animal shed can be understood in a broad sense not only the actual accommodation area for the animals but also any other possible working areas, such as that for processing liquid manure to manure pellets, in addition to areas located close to the farm building and functionally joined thereto.

One of the possible applications which is of particular importance relates to a device wherein means are present to subject air for discharge from the farm building, in particular from the accommodation area of the animals, to a treatment before it is transported to the outside, which treatment comprises carrying this air through the spray range of one or more spray devices for washing liquid.

The emission of ammonia still remaining and other harmful substances as well as dust particles can hereby be reduced to a significant extent; they can to a substantial extent be absorbed by the liquid droplets, whereby cleaning of the air takes place. The air is, as it were, washed and freed to a large extent of ammonia and dust. The air through-feed moreover achieves that the air to a large extent absorbs moisture in the form of vapour from the liquid droplets, which, in the case of discharge to the outside atmosphere, results in a substantial decrease in the volume of moist constituents of the manure. The droplets will in addition absorb oxygen from the air, which furthers the binding of ammonium ions to nitrate when feeding of the washing liquid back into the system.

When means are used to subject contaminated air to said treatment in a substantially continuous process, an optimal effect is achieved. The effect is otherwise already marked substantial also, when there is some discontinuity in the process when the process is also discontinuous.

The invention can advantageously be applied in an animal shed with a natural air circulation, for instance in the accommodation area or in the discharge outlet. In preference the animal shed according to the invention is provided with means for air discharge, such as a exhaust installation, and means for supplying fresh air such as an air inlet to the shed and/or conversely an air delivery installation for supplying fresh air and an outlet for the air for discharge. Due to the more rapid passage of air through the spray zones for instance, the effects of the invention are achieved to a greater degree, and also practically all discharge air can be subjected to the treatment.

In an particular embodiment of the invention, which can be employed with advantage as component of a central air feed and discharge system, supply of air proceeds via a system of pipes and discharge of air proceeds via a space enclosing the pipes, which space may for instance have a tubuler or tunnel-like confined shepe. Supplied air and discharge air are preferably carried in opposing directions. Air supply through the pipes and air discharge through the space around the pipes can be provided by an air exhaust and/or respectively an air delivery installation. Energy exchange is hereby enabled between the relatively cold or warm incoming air in the pipes and the air for discharge flowing therearound.

In a preferred embodiment one or more spray devices for washing liquid, preferably a plurality of spray devices in the longitudinal direction, is/are disposed in the space, this preferably above the pipes. The washing liquid can be carried back again to a collection tank. In the case of counterflow the heat exchange is intensified and in order to achieve this the inlet for discharge air is preferably placed as far removed as possible from the inlet side for the incoming air.

In such a device an intensive heat exchange is possible between fresh air in the pipes and the liquid and discharge air flowing round the pipes. In the winter the air in the pipes will be comparatively cold and the washing liquid warm, whereby the air will require virtually no heating, or in any case less, prior to being delivered to the accommodation area. The reverse is the case in the summer. Warm outside air will already be partially cooled through contact with the colder liquid. As a result of this system, which is also suitable for other purposes, the farm building can be used during periods when it is not too cold virtually without additional heating. This results in a considerable saving in energy and therefore heating costs and, in the summer, a cooler accommodation climate. In the case of extreme cold or heat it may be desired to switch off the sprayers temporarily or partially in order to optimalize the washing liquid temperature. This can be done without problem as long as cleaning of the discharge air takes place elsewhere in the discharge path. This component can also serve as an important means for instance for the reduction of the moisture content of the manure volume due to the evaporation of washing liquid that occurs, whereby the manure becomes concentrated and can be processed in a more responsible manner. It has been found in practice that in the summer the evaporation of moisture out of the manure can even exceed the production thereof by the animals. In winter the same amount of moisture is generally evaporated as is produced. This device further offers the possibility of discharge air cleaning and oxygen enrichment.

A tunnel or tunnel system located in the ground, for instance under or adjacent to the building, can moreover advantageously be present, via which the supply of air to the building takes place. The supplied air is thereby heated or cooled to ground temperature according to the season, which likewise has a temperature-stabilizing effect. The supplied air can optionally be fed therefrom via the pipe system or directly to the accommodation area. If desired, the discharge air and the incoming air can advantageously be guided through one or more heat exchangers for an additional heat exchange.

The intimate mixing of washing liquid with air and/or the other means can preferably be applied in an animal shed with a manure collection space which is connected to or lies beneath the stall of the animals.

In a further important embodiment thereof according to the invention the floor for the animal stall(s) contains a grid which lies above at least a portion of the manure collection space and one or more spray devices are present in the manure collection space, lower than the grid but above the washing liquid layer, which cover a spray range in the manure collection space at least over a substantial part of the surface of the manure collection space, preferably over practically the whole surface area thereof.

As already described, the supply of fresh washing liquid to the already present washing water layer increases the absorption capacity and binding of ammonia which would originate precisely in this location through reaction of liquid and solid excretion products. Any ammonia which may still escape and, together with possible other harmful substances, reach this space is still subjected to a washing treatment by the spray device, whereby it is returned to the washing liquid layer. This embodiment can further also be used as means for utilizing the resulting effects of cleaning, oxygen absorption, evaporation and energy exchange. It is also important that the spraying treatment can be performed here without disturbing nuisance for the animals; it also results in an environmentally-friendlier climate in the accommodation area and shed themselves, with less contamination, stench and dust.

This effect can be intensified in a shed according to the invention wherein means are present, for instance one or more outlet openings, for discharging the air out of the accommodation area via the manure collection space. A portion of the grid can herein be covered by a mat of thin material such as a rubber mat, wherein the air discharge takes place under the mat and a pleasant laying location for the animals is obtained.

Spraying can otherwise also take place elsewhere in the accommodation area above the grid at a position where the animals are not subjected to any nuisance therefrom.

It is also possible with advantage to dispose one or more spray devices in a separate air discharge space which is connected to the accommodation area of the animals and preferably connected to the manure collection space. In accordance with the set requirements, only the discharge space can be used for cleaning discharge air or only the manure collection space or the above described embodiment with pipe system; when the discharge air is discharged successively through a combination a significant additional cleaning, evaporation and energy exchange effect is obtained. Means can for instance be advantageously provided, for instance an exhaust installation, to carry the air through the spraying zone of at least one spray device in the manure collection space and subsequently through the washing liquid from one or more spray devices of one or more connecting air discharge spaces.

A particularly compact assembly can be obtained when the discharge space is situated at least partially under the working passage adjacent to the manure collection space and optionally partly beneath the grid that is covered; also for instance in the case of conversion of existing farm buildings can the connecting discharge space be connected in simple manner on the outside of the building to the accommodation area, or also in or below the main pathway. Use can herein advantageously be made in this discharge space of a pipe system with spraying for the above described purposes. Spraying can also take place in a discharge space without nuisance for the animals. It is also possible to spray only in this space and allow the washing liquid to drain off, wherein this can also provide, directly or indirectly, the supply of a washing liquid flow to the manure collection spaces. These can, if desired, then function without spraying.

The supplied air and/or discharge air can further be carried advantageously through at least one further heat exchanger in order to achieve an additional heat exchange.

It will be apparent that in a device according to the invention a spray device in an animal shed offers advantages for many different applications. Means are preferably present in an animal shed according to the invention to execute the supply of washing liquid to one or more spray devices in an substantially continuous process to be realized without any nuisance for the animals and in simple and inexpensive manner; the said effects will thereby occur to an increased degree. Conversely, short interruptions are also possible while still preserving considerable advantages.

In preference a washing liquid is used which is obtained at least partially and preferably practically entirely using means for separating the thin fraction out of the manure produced by the animals and for subjecting the thus obtained thin fraction to an oxygen enriching device. This is preferably formed by an aerating device which intensively aerates the washing liquid such as the one further elucidated hereinbelow; it is however possible instead of this latter to apply a treatment with oxygen or to achieve this by adding unharmful chemical means. The thus obtained liquid is preferably used as washing liquid and can still contain for instance c. 0.5 to 4%, preferably 1 to 2%, of finely divided solid manure constituents and other substances present in the settled thick fraction. It is of course possible to add if necessary to the washing liquid mains water or a watery solution that is harmless for animals or micro-organisms if a shortage of washing liquid should occur due to excess evaporation. This is preferably done as little as possible in order to keep the volume of manure as limited as possible. By making use of the above described evaporation effects which occur with spray devices it is possible within the scope of the invention to drastically reduce the volume of liquid manure, particularly the moisture content thereof; this can be carried out to an extent such that, in addition to a constant limited quantity of circulating washing liquid, substantially only solid manure constituents remain. This makes practically possible the further processing in the animal shed to manure pellet in a continuous process.

The above described embodiments are focussed mainly on effects such as evaporation, cleaning and energy exchange with washing liquid such as occur during intimate mixing with air. The supply and discharge provides the additional possibility of forming in a manure reservoir a layer with increased ammonia absorption capacity, whereby emission of ammonia from the reservoir can already be markedly reduced. Use is advantageously made of this property in a circulation system for washing liquid which can if desired also serve as supply to the sprayers.

According to a second aspect of the invention relating to this supply and discharge of washing liquid, circulation means for washing liquid are preferably present for this purpose in an animal shed according to the invention, which means carry washing liquid in a circuit to at least one collection space in which washing liquid is present and which is provided with feed and drain means for manure produced by animals and which drain off washing liquid present there to at least one oxygen-enriching device, and return washing liquid treated therein to the relevant collection space(s). The collection space can herein preferably be formed by a manure collection space communicating with the stall and/or it can also be the collection space for manure which forms part of a separating device for removing and/or sieving any solid constituents that may have been carried along with the washing liquid. As a result of the circulation the washing liquid layer in the manure collection space can be regularly renewed and the ammonia-binding action increased.

In an animal shed according to the invention the circulation means for washing liquid are preferably embodied such that they circulate the washing liquid in the circuit in a substantially continuous process. A practically continuous supply of fresh washing liquid is thereby obtained, which results in a continuous considerable reduction in ammonia emission. Understood here by a substantially continuous process is the supply, through the circulation, of washing liquid to the manure collection space(s), wherein the ammonia absorbing action is substantially maintained. Interruptions of short duration which still preserve the continuity of this process are permitted. Interruptions of longer duration with a relatively short supply time may already result in a considerable reduction. For instance, when washing takes place only for a short time once or several times a day only a limited binding of ammonia is achieved.

It will be apparent that other means may be present in the circuit, such as for example a reservoir for washing liquid which is preferably aerated continuously by the aerating device and from which takes place the feedback of aerated washing liquid to the collection space(s). Because the washing liquid can also carry coarser constituents with it out of the collection space, a separating device can advantageously be arranged between the collection space and the oxygen enriching device.

The circulation means can advantageously comprise means which carry the washing liquid through or over at least a substantial portion of the manure and washing liquid present in at least one collection space. In a particular embodiment thereof this is achieved in that the circulation means comprise means, for instance an overflow, to feed and drain substantially only an upper layer of the washing liquid over at least a substantial portion, preferably over practically the whole washing liquid surface, of the manure and washing liquid present in the manure collection space. An active layer for reduction of ammonia emission is thereby formed in the upper layer, while anaerobe zones for so-called denitrification remain preserved in the lower layer.

For the supply of washing liquid use can with advantage be made herein of at least one spray device for washing liquid whereby a desired spraying range of the surface can be adjusted simply. The spray device can therein also be a means for bringing in intimate contact with air whereby previously described advantages such as oxygen enrichment can be utilized at the same time. On the drain side an overflow to the circuit is preferably used as simple means in the collection space.

It is also possible with advantage to cause this feedback of washing liquid to take place over the desired range by running off washing liquid to the collection space from another part of the circuit, for instance from an adjacent air discharge space. In another embodiment the feed of washing liquid to the manure collection space takes place using a conduit provided with outlet openings which is located in a washing liquid-containing layer of the manure collection space.

When the flowing means are adapted such that washing liquid is supplied only over or through a substantial portion of the surface, a significant reduction in emission can nevertheless already be obtained by spreading thereof, albeit to a lesser extent than in the case of supply over the whole surface. This means thereby offers the possibility of influencing the degree of nitrification and denitrification. When only the upper layer is carried away by the circulation means, the settled parts are periodically discharged via washing or suction means to a separating device. It may on the other hand be desired to lessen denitrification for instance because of the intended manure composition. In order to limit denitrification as much as possible the circulation means can according to the invention feed and drain the washing liquid in the manure collection space(s) such that practically all solid constituents are carried away. This can for instance take place by using an increased through-flow speed or a larger quantity of washing liquid.

In a preferred embodiment this can be achieved in that the manure collection space(s) of successive stalls of one or more adjacently located accomodation areas are mutually connected as a continuous channel, wherein a collective drain for washing liquid is provided on at least one outer end of the channel. In a particular embodiment thereof a collective drain is provided at both outer ends of the channel, which are opened alternatingly at the one end and at the other end for draining washing liquid and manure constituents. The channel-like connection results in a steadily increasing flow in the direction of the drain of washing liquid coming for instance from spray devices present there, whereby a forward pushing action is obtained which carries practically all manure constituents along through at least a number of manure collection spaces. When a drain is present on both sides a reciprocal flow can be achieved by alternating opening at the one or at the other end which virtually removes all solid constituents under all stalls.

It will be apparent that the circulation means can be integrated in exceptionally effective manner with the other embodiments for intimate mixing of washing liquid with air, since they also make use of a flow of washing liquid.

It is per se known that micro-organisms play a part in the degradation processes of manure constituents. For instance, so-called nitrification by means of nitrifying bacteria is involved in the converting to nitrate of ammonia absorbed in the washing liquid in the form of ammonium in an aerobe environment. Understood here by nitrifying bacteria are bacteria involved in the whole of nitrification processes, that is, both the so-called nitrosofying bacteria which convert ammonium into nitrite and the nitrifying bacteria which further converts nitrite into nitrate. Another conversion which can take place in anaerobe areas of the manure collection spaces is the conversion by denitrifying bacteria of nitrate into the harmless nitrogen (N₂), so-called denitrification. In the converting of manure further biochemical reactions may also be involved which convert other constituents of the manure and which play a part in the degrading process.

Bacteria can enter the manure or washing liquid in different ways, such as for instance via the excretion products of the animals. There they will be able to survive and be active to a greater or lesser degree or only temporarily depending on whether the chosen conditions are favourable or less favourable.

According to a third aspect of the invention which can be combined in a particularly appropriate exceptional manner with the previously described means, further reduction of ammonia emission is obtained by stimulating the biochemical activity of micro-organisms.

Provided for this purpose in a preferred embodiment of an animal shed according to the invention are means for activating washing liquid, which means subject washing liquid in a circuit travelled by washing liquid to an aerating device arid to further activating means which stimulate the activity of micro-organisms for the degrading of harmful substances originating from manure, such as ammonia. The further activating means can advantageously consist of bringing washing liquid into contact with a source of micro-organisms, for example active sludge, present in the washing liquid circuit. The activating means can also comprise with advantage a substrate, preferably of relatively large surface area, for instance in the form of a netting, as a growth environment for micro-organisms in the circuit travelled by the washing liquid. These substrates, which for instance consist of plastic, are commercially available as so-called "bio-blocks" or "bio-rings".

Understood here by stimulating the activity is the stimulating of the presence, growth and/or action of micro-organisms. Referred to as active sludge is a commercially available, usually liquid mass which forms a good nutrient medium for bacteria present thereon which have been arranged for instance by inoculation. The active sludge is distributed through the system by the circulation of the washing liquid and is present in, among other places, the collection spaces such as the manure collection space. Due to its own growth the active sludge in practice requires no, or only occasional, supplementing. It is possible to work without addition of active sludge but the start-up time for the development of bacteria will then take a longer time.

Activating means which stimulate the activity of nitrifying bacteria are of particular importance in this respect since, by converting ammonium into nitrate, they increase the absorption capacity for ammonium, and therefore that for ammonia, in the washing liquid. To this end the further activating means can be arranged in a preferred embodiment in the form of a substrate in the aerating device itself. In the there aerated aerobe part of the washing liquid, preferably in the aerating tower(s) to be described hereinbelow, these bacteria can find a favourable growth environment where nitrification can also take place and from where they are fed with the enriched washing liquid to the manure collection space(s) for further nitrification and/or denitrification.

The further activating means can with advantage also be arranged in the form of a substrate in a space in which at least one spray device for washing liquid is situated such as for instance an air discharge space.

In the above described embodiments with a pipe system, wherein one or more spray devices are disposed in the space surrounding the pipe system, a layer with bacteria is preferably present at least on the pipes. The constant supply of sprayed washing liquid which trickles along the pipes has been found to be a favourable environment for the forming of a layer in which nitrification can take place and therefore also furthering of the ammonia-absorbing capacity of the washing liquid. Parts of the nitrate-rich layer on the pipes drop off from time to time and are returned via the washing liquid circuit to for instance the separating device which separates them at least partially with the solid constituents.

In a preferred embodiment the washing liquid circuit comprises at least one collection space in which washing liquid is contained, preferably a manure collection space and/or the collection space of for instance a separating device. In these places nitrifying bacteria in the washing liquid layer find an aerobe environment and in the collection space ammonium as constituent for conversion to nitrate. The ammonia-absorbing capacity hereby remains high.

Activating means can advantageously also be present which further the activity of denitrifying bacteria in anaerobe zones. It is noted that there are bacteria which in an aerobe environment can convert ammonium into nitrate and in anaerobe environment can convert nitrate into the harmless nitrogen.

Denitrification can be stimulated by preserving in the washing liquid circuit at least one anaerobe zone for denitrifying bacteria, preferably in the manure collection space in the settled portions of the manure. The ammonia-absorbing capacity can be intensified by denitrification because the nitrate concentration is lowered and nitrate saturation will possibly occur less rapidly. As a result further conversion of ammonium into nitrate can take place and the ammonia-absorbing capacity therefore increased.

When a lower-nitrate environmentally-friendly manure pellet is desired as end product, denitrification can advantageously be applied as an environmentally-friendly means which moreover largely replaces the concentration of ammonia in the discharge air with harmless nitrogen.

Alternatively, a higher nitrate content can be achieved by partially or wholly limiting denitrification and particularly by stimulating nitrification; in that case the means mentioned above with regard to the circulation means for controlling the nitrification/denitrification process or partial or practically entire removal of anaerobe zones can be advantageously applied.

As activating means the continuity of the circulation process is also of importance. Thus a prolonged interruption of for example a day in aerating and/or circulation can greatly reduce the activity due to a fall in the numbers of bacteria, in particular the aerobe bacteria. When the circulation or aeration is restarted it can take a lot of time to build these up again, which can be accelerated by adding active sludge.

In preference the activating means therefore comprise means for circulating the washing liquid in a substantially continuous process in the washing liquid circuit, wherein use can very advantageously be made of the above described circulation means. Understood here by a substantially continuous process is a preferably continuous process in which eventual interruptions are so short that the activity of the micro-organisms continues to a significant extent.

The activity of micro-organisms, in particular nitrifying bacteria, can with advantage optionally be furthered by circulating the washing liquid in a continuous process in a circuit comprising an aerating device and optionally a manure collection space; after interruption the thus preserved bacteria can be fed back into the circuit.

Of importance further is the washing liquid temperature, which lies preferably between 15°C and 35°C. It has been found possible in practice to build up and maintain an increased biochemical activity while making use of continuous processes. It has been found possible in practice to also obtain good results for instance in the case of denitrification when the washing liquid has a relatively high pH of for example approximately 8-9.

The activating means described with regard to this third aspect lend themselves particularly to integration into a combination with the above stated circulation means and the means for intimate mixing.

When these are used in a practically continuous process a very high reduction in emission of ammonia can be obtained. It has thus been found in tests that in this case the ammonia emission from an animal accommodation can be reduced by 98% compared to the same conventional animal accommodation in the same farm building in which these means were not applied. Furthermore, it was possible at the same time herein to convert the total quantity of produced liquid manure, by means of the described evaporation processes and practically without energy consumption, into solid manure constituents with a moisture content of 60%, which can be processed by further treatment in the means to be described hereinbelow to dry manure pellet with a moisture content of only 10 to 20%.

In accordance with the environmental requirements to be set, at least one of the means described herein for air discharge cleaning for circulation and activating of microorganisms can be used for a substantial decrease in the emission of ammonia and other unpleasant vapours; in the case of interruption of one of these means, a practically continuous low level of emission can still be maintained by one or both other means taking over.

On the other hand, the invention makes it possible to integrate these means in exceptionally simple manner and to simultaneously apply at least two, preferably three, of these means in a practically continuous process in order to obtain a particulary great effect.

As aerating device an aerating tower can advantageously be used having a number of elongate closed holders connected in series, preferably at least three holders, each having close to their underside a liquid inlet and close to their top side a liquid outlet, wherein the outlet of the one holder is connected to the inlet of a following holder and the liquid inlet of at least the first holder is provided with means for admixing air into the liquid.

These means can with advantage be formed by a pump wherein the feed pipe for washing liquid to the pump is provided forward of the suction side of the pump with an air inlet, wherein a control valve for the liquid is preferably arranged in the feed pipe for the liquid forward of the air inlet. In such an aerating device the pump ensures that a large quantity of air is drawn in together with the intake flow of the washing liquid, which air is broken into very small bubbles by the pump and is effectively absorbed into the liquid in the aerating tower.

Preferably received in the aerating tower are bio-blocks formed as a netting of large surface area of for instance plastic on which micro-organisms can deposit themselves in order to activate the aerated washing liquid.

It is favourable to dispose a separating device in the animal shed which comprises a collecting tank for manure having therein at least two compartments effectively separated from each other by an obliquely disposed conveyor belt located partly below the liquid surface and provided with sieving means such as sieving sheet or gauze for removing solid manure constituents from the one compartment and allowing through sieved thin fraction to the other compartment, and that means are provided for removing the solid manure constituents from the conveyor belt. This enables a favourable separation of the thick and thin fraction of the manure. The thin fraction will generally be carried to the aerating towers, the thick fraction can be processed into manure pellets.

It will be apparent from the foregoing that in a simple and environmentally-friendly manner the invention not only enables a reduction in ammonia emission but also makes it possible to reduce the liquid manure volume such that, except for a small constant quantity of washing liquid that is necessary for the circulation system, only a concentrated quantity of manure remains continually. This lends itself particularly to processing to manure pellet in the animal shed itself, preferably in an automatic processing system. To enable this the invention has for its object to provide economically viable means for an animal shed without which the manure problem would not be wholly resolved. It is otherwise possible to reduce the moisture content by evaporation to for example 80% of the liquid manure volume with the means of the invention, whereby the manure volume is already markedly reduced and a high-grade quality liquid manure can be obtained as intermediate product.

The processing to manure pellets can take place in various ways. In a very favourable embodiment according to the invention means are present for the purpose of this processing for treating concentrated manure constituents, feed means for guiding the concentrated manure constituents to a drying conveyor belt which preferably runs past air inflow openings in the farm building, a pellet press for processing the pre-dried constituents to pellets, whereafter the pellets are carried away over a further drying conveyor belt preferably running past air inflow openings in the farm building for definitive drying. Moisture herein evaporates out of the thick fraction while the active constituents for manure, such as minerals, remain behind in the thick fraction, which improves the quality of the manure processed to pellets.

In a favourable embodiment according to the invention the pellet press contains a housing in which is received a through-feed member, such as a screw conveyor, which presses the solid manure material through openings arranged in the disc and having the size of the desired pellets, wherein a cutting knife driven rotatably by the screw conveyor is pressed against the disc. Such a pellet press is simple of construction, requires only a small drive power and has the particular advantage that undesired elements such as hair of the animals is cut small by the cutting knife so that blockage of the pellet press will not occur.

To drive the pump of the aerating towers use can be made of a thermal motor, preferably a gas motor or gas turbine, wherein heat for cooling and/or heat of the exhaust gases can be utilized for maintaining a desired temperature of the washing liquid. The thermal energy is herein utilized maximally.

The invention further relates to a method according to claim 1, wherein one or more of the above described means according to the invention are used.

The invention will be further elucidated with reference to a number of drawings of embodiments of an animal shed according to the invention. Like reference numerals refer to like components. It is noted that the embodiments drawn serve only as example and cannot be limiting for the scope of protection of the invention.

Figure 1 shows a partly broken away perspective view of an animal shed according to the invention.

Figure 2 shows a partly broken away perspective detail view of a stall for animals having located thereunder a manure collection space and fresh-air supply respectively heating system.

Figure 3 shows a partly broken away perspective detail view of a fresh-air supply respectively heating system with a heat exchanger.

Figure 4 shows a sectional view along the line IV-IV in figure 5.

Figure 5 shows a sectional view along the line V-V in figure 4.

Figure 6 shows a sectional view along the line VI-VI in figure 5.

Figure 7 is a partly broken away perspective view of a simplified embodiment of a fresh-air supply system according to the invention.

Figure 8 is a partly broken away perspective view of a manure processing system according to the invention.

Figure 9a shows a section as in figure 4, wherein the washing liquid in the manure collection space is however aerated in another manner.

Figure 9b shows on a larger scale a pump with feed pipe which may be used in the aeration as according to figure 9a.

Figure 10 shows schematically a preferred embodiment of a pellet press.

Figure 11 shows very schematically a part of a possible lay-out of an animal shed.

Figure 12 shows a further disposition of means for discharging contaminated shed air.

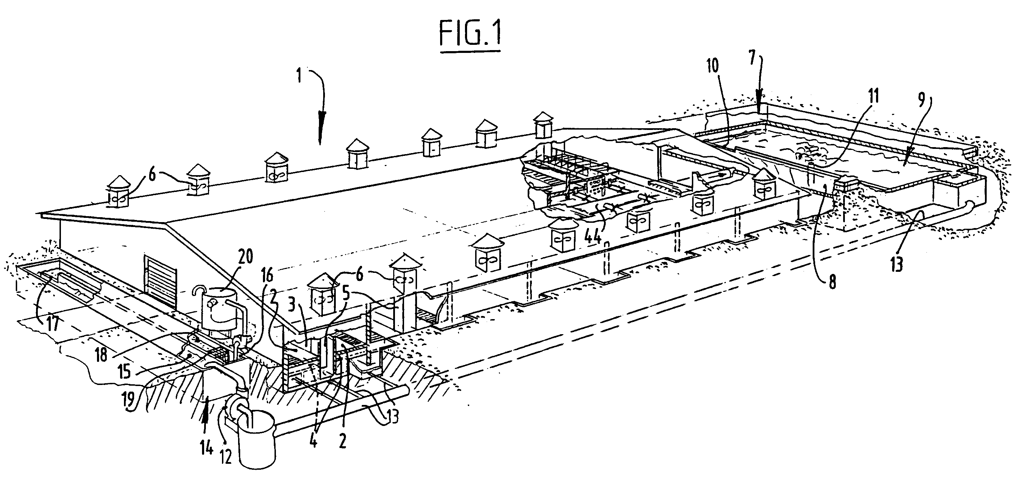

Figure 1 gives a schematic overview of an animal shed 1 according to the invention, for instance for pigs. The shed contains at least one accommodation for animals which is sub-divided into stalls 2 in double configuration, between which is situated a feeding passage 3. Manure collection spaces 4 are situated beneath the stalls 2. At the nd of the feeding passage is situated an air discharge 5 in which is accommodated a fan 6. In this embodiment a settling tank 7 for manure with an only partly shown covering is located outside the farm building. Washing liquid from the manure collection spaces can be transported hereto continuously and the totality of the liquid manure from the manure collection spaces periodically, for instance. The settling tank 7 is sub-divided into two compartments 8 and 9. The manure is situated in compartment 8, settles therein and the upper thin fraction runs via an overflow 10 to compartment 9. In this compartment the thin fraction is thoroughly aerated by an aerating installation 11 and thus forms washing liquid. A collection tank 14 divided into two compartments is filled up via a pipe 13 and a pump 12 with this washing liquid which as a result of the aeration contains practically no more ammonia. The fresh washing liquid, but also the washing liquid from the manure collection spaces, which is guided via an overflow to the pipe 13, enter compartment 15. Any solid parts that may still be present can settle in compartment 15. Via an overflow 17 the liquid enters compartment 18, in which is situated a filter 19. The washing liquid is pumped via a subcompartment 16 to a washing liquid store 20. This store is placed in this embodiment at a distance above the pipes of spray devices for the washing liquid such that the pressure in the spray devices has a desired level. The washing liquid can also be carried in other ways to the spray devices using a pump.

The collection tank 14 is placed for the sake of clarity in figure 1 outside the animal shed but in practice the storage space is located inside the farm building and usually in the centre thereof. This is practical, while in addition too great a fall in the temperature of the washing liquid is prevented in the winter.

It will be apparent that figure 1 relates only to a schematic example. The settling tank 7 for instance is not essential, but the manure can settle in the manure collection spaces. Aeration of the washing liquid can also take place elsewhere, for example in the liquid store 20. In addition the air cleaning means are not shown here. Hereinafter the various aspects of the invention will be further discussed with reference to embodiments not limitative of the invention. The most important aspects represent, as already stated, the preferably continuous air cleaning, the substantially continuous circulation of washing liquid, the aeration of the washing liquid, discharge through the air as vapour of the moist constituent of the liquid manure, the processing of the liquid manure to pellets and the energy-saving embodiment, wherein, through a meaningful integration thereof, an optimum, environmentally favourable animal shed is obtained.

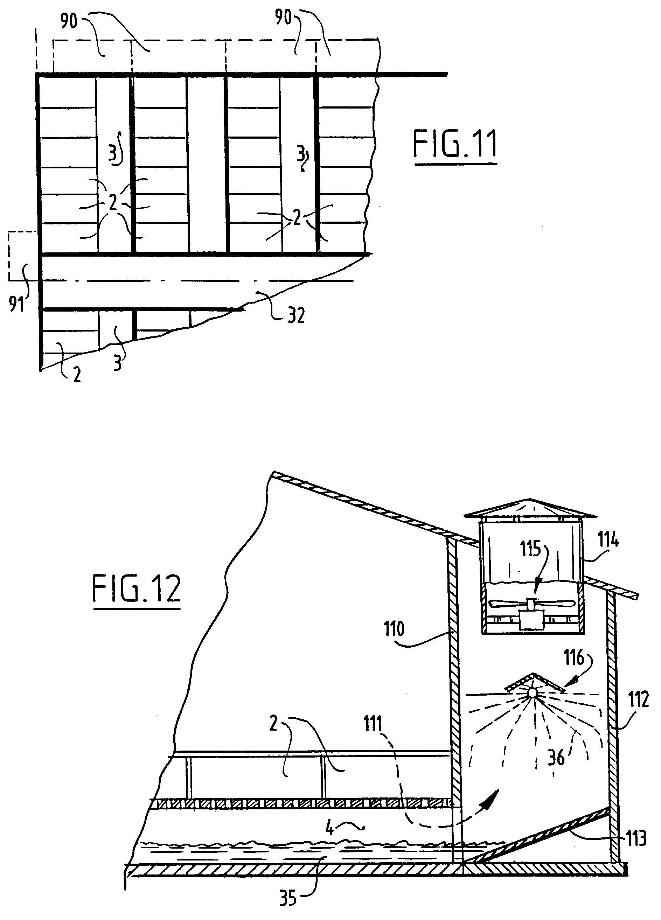

For the sake of clarity, before discussing further embodiments, a possible lay-out of an animal shed is illustrated with reference to figure 11. The shed can have a number of accommodation areas for the animals, each with a number of stalls 2 which connect onto a working passage or feeding passage 3. The accommodation areas connect onto a common main pathway or central pathway 32, wherein doors (not shown) give access from the main pathway 32 to the working passages 3. Shown with dashed lines are spaces 90 on the outside of the building for the discharge of contaminated shed air out of accommodation areas for the animals, for instance as annex to existing sheds as will be discussed further with reference to figure 12. Shown as alternative at 91 with dashed lines is a space located on the outside of the building onto which connects an air discharge path located under the main pathway 32 for discharging into the outside atmosphere air flowing out of the joint accommodation areas in this air discharge path. it will otherwise be apparent that discharge of shed air to the outside atmosphere can in general be realized at any suitable location.

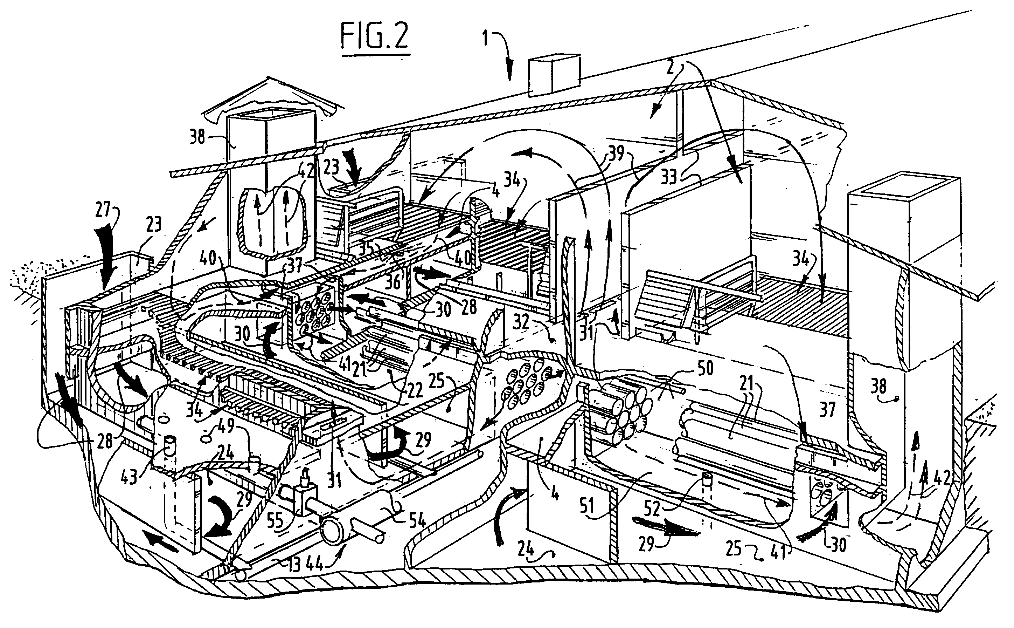

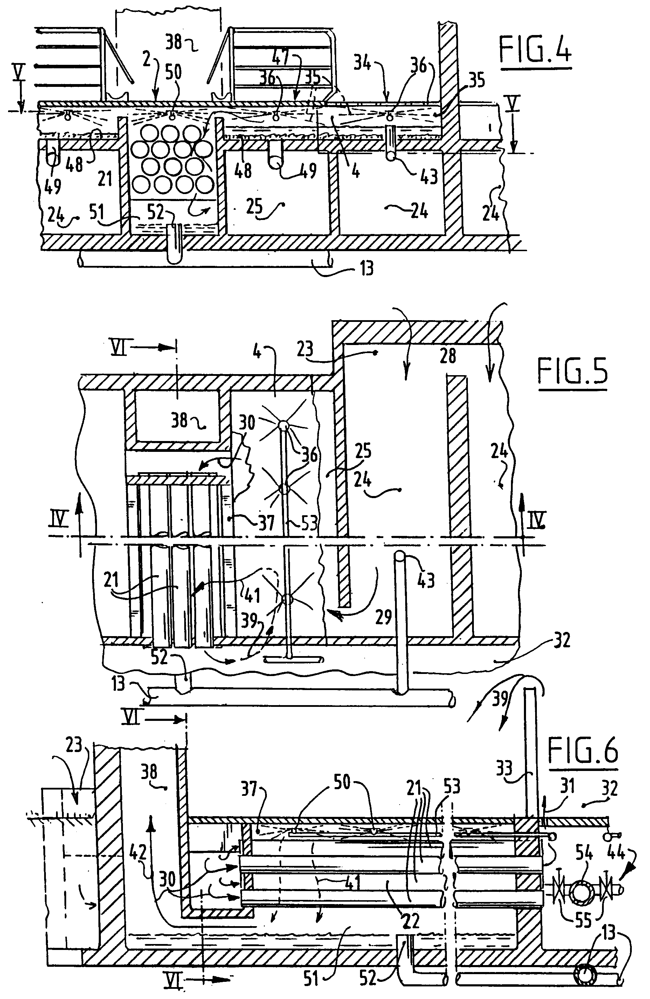

Figure 2 shows in detail an embodiment of a fresh-air supply and heating system which is constructed from a number of pipes 21 and an air discharge space 22 enclosing the pipes, which are located in the embodiment shown here beneath the working passage. Fresh air enters the farm building at inlet 23 and, in the embodiment shown here, is transported via a space under a manure collection space and consisting of two mutually connected compartments 24 and 25 to the pipes 21 (see arrows 27, 28, 29 and 30). The feed of outside air can however also take place directly to the pipe system. The air comes out again at the outer end of the pipes and enters the central pathway 32 of the animal shed via passages 31. Over the walls 33 of the central pathway the air reaches the accommodation areas with the stalls 2 for the animals. The air then enters the manure collection spaces 4 via grids 34 arranged in these stalls and is there placed in intimate contact with washing liquid 35 by means of sprayers 36 (see also figure 4). In accordance with an important embodiment of the invention these sprayers are arranged lower than the stalls formed by the grids. They can spray continuously, together if required, covering the whole surface of the manure collection space without spray water that is disturbing for the animals coming above the grid.

The ammonia present in the air is bound by the washing liquid. The already partly purified air leaves the manure collection space through passage 37. Any ammonia still remaining can be washed out of the air by the washing liquid from sprayer 50. The heat can also be absorbed from the air by the washing liquid. The washing liquid flows along the pipes 21 in which fresh air is present and exchanges energy therewith. The air for discharge, which is freed of ammonia and heat and which has absorbed a quantity of moisture, is finally discharged to the outside via outlet 38 (see arrows 34, 40, 41 and 42). The degree of air pollution still possibly occurring therein is clearly negligible.

As already discussed in the introduction, washing liquid consists in the invention of aerated moist fraction of liquid manure. The air for discharge into the atmosphere which is carried by the sprayed washing liquid can absorb a quantity of moisture therefrom in the form of water vapour not subject to contamination which corresponds on the whole with moist fraction of the manure produced by the animals. The significant advantage is hereby achieved that a surplus of liquid manure volume can become a thing of the past.

The air channels can of course also be formed in other suitable manner. It is pointed out here that it is recommended to cause the flow direction of the air supplied through the pipes and of the air discharged through the space around the pipes to proceed in opposed directions in order to effect the greatest possible heat transfer.

Figure 2 further shows the overflow 43 for washing liquid in the manure collection space 4, which washing liquid can be carried via conduit 13 to an aerating device and forms part of a preferably continuous circuit of washing liquid, wherein only the upper layer flows away via the overflow. Also shown is the sewage system 44 for possible periodic removal of manure and washing liquid from the manure collection space to for instance a collection tank (not shown). It is further noted that the spray devices may consist of simple, commercially available sprayers, for instance of the type wherein liquid is sprayed against a conical spreader plate and wherein the size of the liquid droplets and the spraying range are controllable, for instance by adjusting the pressure of the washing liquid fed to the sprayers. A mist can even be obtained. The smaller the droplets, the more effective the action will be.

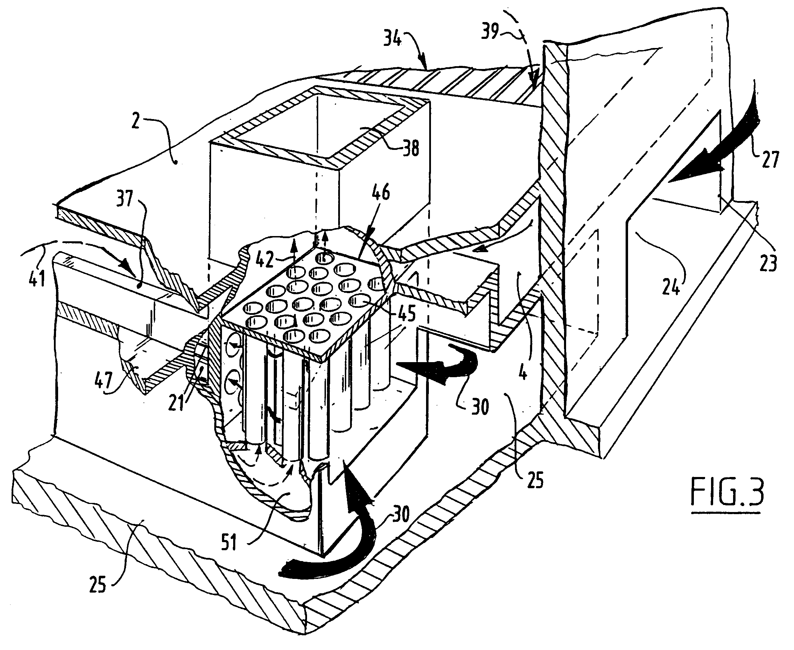

Figure 3 shows a fresh-air supply and heating device which is provided with a heat exchanger for additional exchange of energy between the fresh air and already used air. The fresh air is first guided along the pipes 45 of heat exchanger 46 and, in the case of warm used air, there absorbs heat and, in the case of cool used air, surrenders heat. The air subsequently enters to the inside via an intermediate space at the beginning of the pipes 21. The used air flows through the pipes 45 and either surrenders or absorbs heat.

Figure 4 shows two oppositely located stalls 2 for the animals. The floor 47 consists at least partially of a grid 34 through which falls the manure produced by the animal. In preference the whole floor is formed by the grid and a portion thereof is covered by a mat of a thin material such as for instance rubber, on which the animals can lie. The thick fraction 48 of the manure comes to lie under a layer of washing liquid in the manure collection space 4. The manure collection space has an overflow 43 for the washing liquid contaminated with manure particles which leads via conduit 13 to separating and aerating means, which are discussed later. There is also an outlet 49 to a central sewage system to enable possible periodic draining of the totality of manure and washing liquid. Air from the accommodation flows through the grid 34 into the manure collection space 4 and is there placed in intimate contact with the washing liquid 35 which is sprayed by a spray device 36, respectively by a number of spray devices, inter ali for the purpose of binding ammonia present in the air. The air then flows into a discharge space communicating with the accommodation area and located beneath the working passage or the rubber mat and along the pipes 21 in which fresh air is flowing. Heat exchange will take place between the fresh air and the washing liquid. Energy exchange can of course also take place between the old air and the fresh air, wherein it is then useful to ensure that both air flows run in opposing direction. Situated above the pipes 21 are sprayers 50 and thereunder is a space 51 for receiving washing liquid, which space is provided with an overflow 52 which in turn leads to the conduit 13.

Figure 5 shows on two levels a top view of a portion of the space under the animal accommodation according to the invention. Visible are the compartments 24 and 25 of the space under the manure collection space 4. Located in the upper portion of the manure collection space 4 are pipes 53 (see also figure 6) provided with sprayers 36. At the arrow 30 the fresh air from the compartment 25 enters the pipes 21. Air from the manure collection space 4 flows according to arrow 41 along the pipes 21. The fresh air enters the central pathway 32 of the accommodation at arrow 39. Reference numeral 38 designates the outlet via which the air for discharge, in which much water vapour is absorbed, is guided to the outside.

Figure 6 shows a longitudinal section along the line VI-VI in figure 5. The pipes 21 can be seen in the space located under the floor of the working passage with sprayers 50 thereabove and the space 51 for receiving washing liquid thereunder. The overflow 52 can also be seen which is connected onto the drain pipe 13 for washing liquid, which pipe leads to cleaning means and means for oxygen enrichment. The outlet 49 shown in figure 4 comes out onto the pipe 54 of the sewage system which is provided with closing valves 55. Air which is fed into the pipes 21 at arrows 30 passes through passage 31 into the central pathway 32 and then flows over the walls 33 at arrows 39. Via gratings and passages (not shown) the air enters the space 22 around the pipes 21, see arrow 41, and there makes contact with sprayed washing liquid from sprayers 50. The virtually ammonia-free air provided with much absorbed water vapour disappears into the atmosphere via space 51 and outlet 38, see arrow 42.

Shown in figure 6 by the arrows 41 is that air for discharge flows transversely in the direction of the pipes 21. A suitable design can of course also result in the air for discharge flowing in lengthwise direction of the pipes 21, and preferably in a direction opposite to the flow of the air in the pipes 21. A maximal thermal transfer will then take place between fresh air and air for discharge.

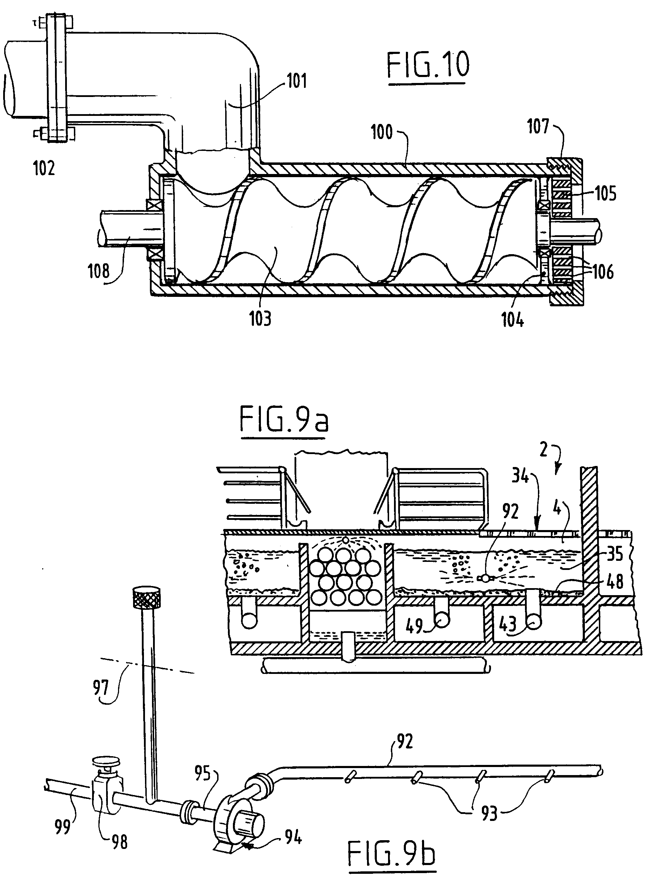

It can be particularly useful to thermally insulate areas of intake spaces for the fresh air, particularly at places where the temperature of washing liquid can be influenced by incoming air, such as for instance the manure collection spaces. A thermal insulation can thus advantageously be arranged in for example the manure collection spaces 4 shown in figure 4 and the as yet not discussed figure 9, as well as on the floor of the working passage 38 which is located above the pipes 21. The liquid in the manure collection spaces is not then thermally influenced by the inflowing fresh air. The fresh air that does come into contact with the non-insulated bottom wall lying in the ground and assuming the temperature of the ground will thereby be heated in the winter and cooled in the summer.

The pipes 21 are preferably coated with a bacteria layer for in situ conversion of substances from the washing liquid. Among other things, nitrification will therein occur. In addition, active sludge can also be present in various spaces in which manure is situated under a layer of washing liquid which may or may not be flowing, for instance in the manure collection spaces 4 or in a collection tank 60 to be discussed later. In the absence of oxygen, anaerobe denitrifying microbiological processes can occur.

Ammonium is converted by means of bacteria into nitrate. Various bacteria are involved in these aerobe nitrification reactions. Nitrosofying bacteria of the genus *Nitrosomonas* convert ammonium into nitrite (NO₂), whereafter nitrifying bacteria of the genus *Nitrobacter* provide the further conversion into nitrate (NO₃).

As previously described herein, so-called active sludge can also be used for the nitrification processes. The working of active sludge is based on a thorough aeration whereby inter alia oxidating nitrification processes are brought about by the micro-organisms in the sludge.

The conversion of nitrate into gaseous nitrogen (N₂), also known as denitrification, is an anaerobe process which thus proceeds in the absence of oxygen. In the practice of the invention this means that denitrification processes can take place in manure which is closed off from air, for example the bottom layer of the manure in the manure collection spaces or manure in a holder closed off from air. Bacteria of the genus *Pseudomonas* can for instance be involved in the denitrification.

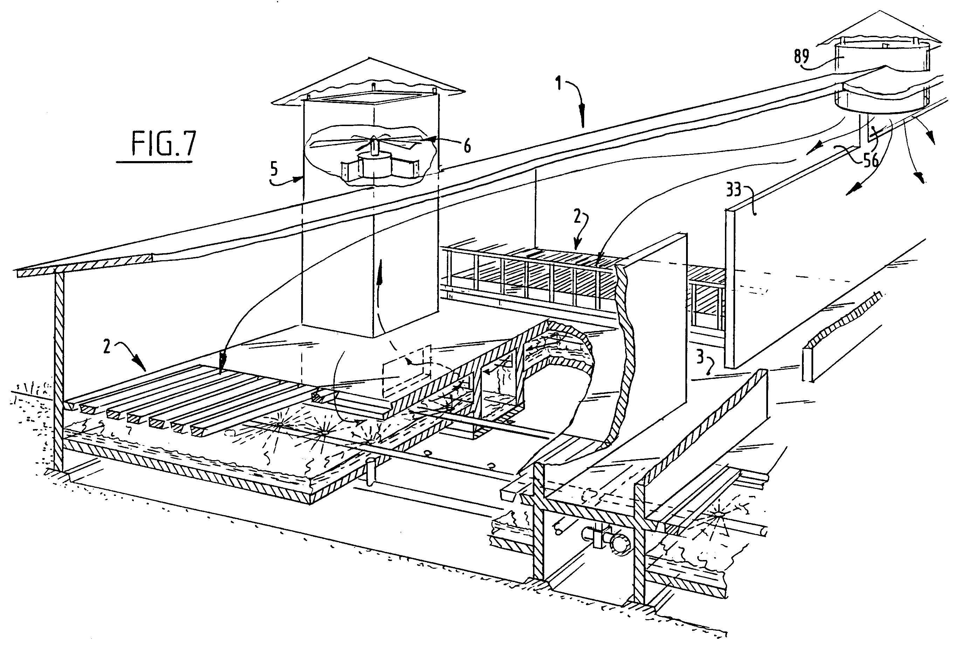

Figure 7 shows a simplified embodiment of a feed and discharge system for air according to the invention without heating system. The animal accommodation 1 is sub-divided into stalls 2 for the animals between which is located the feeding passage 3. Situated at the end of the feeding passage is an air discharge 5 in which is received a fan 6. The supply route for fresh air differs however from that shown in figure 3. In the embodiment shown here an air inlet is formed in the roof of the animal accommodation 1. The air flowing in therethrough reaches the stalls 2 for the animals via inlet openings 56 in the walls 33. Although such a system does not function optimally, results can nevertheless be achieved which are certainly favourable when compared with results in animal sheds according to the prior art.

Figure 12 shows how, in the case of an existing farm building and without drastic alterations, means can be arranged for guiding shed air for discharge to the outside atmosphere through sprayed washing liquid so that the air is cleaned of ammonia and dust, the air also carries with it to the outside evaporated washing liquid and falling washing liquid reconditions the liquid present in the manure collection space. This relates to the annex 90 as already designated schematically with reference to figure 11. Built onto the original outside wall 110 is a space with an outside wall 112. Shed air flows through the grid in the stalls 2 for the animals into the annex on the underside, as indicated with arrow 111. The contaminated air is drawn in by means of a fan 115 situated in a roof passage and carried by sprayed washing liquid 36 from a spray device 116. A plurality of spray devices can of course be placed above each other. The above described favourable effects of the invention are obtained here. The inclining drain floor 113 ensures that no accumulation of solid manure constituents can take place in the annex. The washing liquid flow can moreover run off to the manure collection space, whereby it is not necessary to use a spray device there because the washing liquid forms a layer with increased absorption capacity of ammonia in the manure collection space, which reduces ammonia emission. Instead of discharging air as according to arrow 111 the air could also be guided into the annex through an opening in the wall 110 to be arranged above the stalls and having a exhaust fan therein, this such that this air flows through the sprayed washing liquid. The fan will not be made wet by the washing liquid because it presses air into the annex. As overpressure now prevails in the annex, the opening shown at arrow 111 will have to be closed, or in other words, the upper side of the opening in wall 110 must lie below the liquid level in the manure collection space 4.

Figure 11 shows an alternative of a discharge space 91 for shed air located at the end of the main pathway 32. In this embodiment, which is not further elaborated in the drawing, shed air for instance from the accommodation areas of the animals can be guided into an air discharge space under the main pathway and be drawn into the outside atmosphere by a fan disposed in the annex 91. The air for discharge is herein cleaned, preferably by being carried through sprayed washing liquid which comes out of sprayers disposed in the air discharge space beneath the main pathway. In the schematic figure 11 the successive manure collection spaces 2 of a number of accommodation areas can also be seen. In an embodiment according to the invention already described in the introduction these are interconnected to a common continuous channel per accommodation area. Successive channels can thus be formed in different accommodation areas, which can for instance be connected alternatingly on the outside and the inside to form a meander-shaped channel system, which can advantageously be applied to the method of draining solid manure constituents described in the introduction.

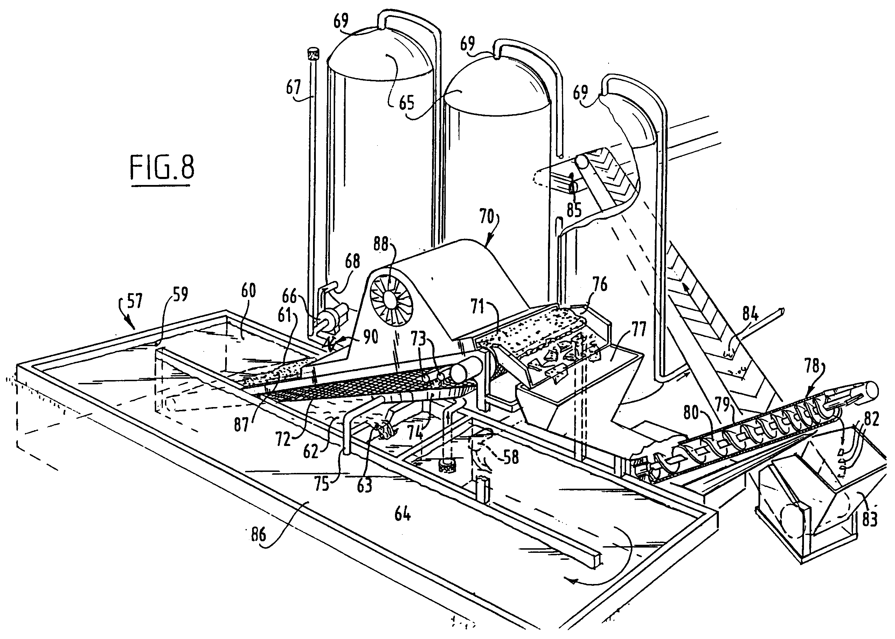

Figure 8 shows a separating device arranged in the farm building for separating the solid manure constituents out of the washing liquid, in addition to an aerating device for the separated thin liquid fraction to be used as washing liquid. Via the outlet 58 of the central sewage system the washing liquid with manure removed from the manure collection space can be carried into a collection tank 57. Washing liquid possibly mixed with solid manure particles and flowing out of the overflow 43 of the manure collection space (see figure 4) can also be guided into the collection tank 57 via the pipe 13 (not shown). In suitable manner, however, a considerable flow of the washing liquid can be chosen such that the solid constituents thereby do not settle, or hardly at all, in the manure collection spaces but are carried away directly with the washing liquid so that no anaerobe zones are then created in the manure collection spaces. Situated in compartment 86 is the contaminated washing liquid with the manure, which totality consists of about 4% solid constituents and roughly 96% liquid constituents. A stirring member (not shown) for mixing the solid parts of the manure in the washing liquid can be disposed in compartment 86 in order to obtain a regular throughput of the solid fraction via a passage 59 to a compartment 60. Placed in this compartment 60 is an inclined sieve conveyor belt 61 which reaches to the floor of the compartment. The sieve conveyor belt hereby divides the compartment 60 into two parts effectively separated from one another so that the leading part containing the solid fraction and washing liquid is separated from the space beneath the sieve conveyor belt.

Washing liquid and solid manure constituents 87 are separated by means of the sieve conveyor belt 61. The washing liquid purified to a large extent of manure particles enters the compartment 62 and via an overflow 63 the compartment 64, from where the liquid is carried to one, but preferably a series of, aerating towers 65; figure 8 shows three closed aerating towers 65 connected in series. The liquid is sucked in by means of a pump 66 which is located below the liquid level of compartment 64 and which is provided with an air inlet 67. The inlet 68 of the aerating towers is placed close to the bottom thereof, while the outlet 69 is situated at the top and connects in turn to the underside of the second tower etc. By placing a number of aerating towers in series they can be arranged in the farm building without problem.

The air inlet 67 for the pump is connected to the liquid intake pipe forward of the suction side of the pump. Further forward of this connection point a control valve 90 is arranged in the liquid feed pipe with which the flow speed of the liquid at the location of the air inlet can be adjusted. By "pinching" the liquid flow a comparatively large quantity of air is carried in. The pump preferably consists of a centrifugal pump or impeller pump for high speed of revolution, for instance 3000 revolutions per minute and with a large number of vanes. Hereby achieved is that the supplied air is broken up into extremely small air bubbles whereby an intensive mixing with the liquid is obtained in the aerating towers 65, wherein a maximum quantity of oxygen is absorbed into the liquid. It is noted that for operation of the environmentally-friendly shed installation only one pump is required, which keeps energy costs low.

By carrying washing liquid provided with the air bubbles successively through the aerating towers - wherein at the outer end thereof cleaned washing liquid can be guided to the sprayers - the air must overcome a counter pressure which is partly dependent on the height of the aerating tower and the number thereof. Five aerating towers connected in series of 5-9 metres in height with a diameter of 100 to 150 cm are for instance used. Due to the long route which the washing liquid must cover through the successive holders under counter pressure the absorption of air, and particularly oxygen, is intensified. The effect is the same as the action of an aerating tower of 25 to 45 metres height, while the towers can still be accommodated in the farm building. In order to prevent air pockets at the top, the closed top sides preferably take a spherical form, as shown in figure 8, and the drain pipes are situated in the extreme top and pass to the underside of the following tower.

it will be apparent that the presence of nitrifying bacteria in the towers will be favourable for the cleaning of the washing liquid. So-called bio-blocks, onto which micro-organisms can be deposited, are advantageously arranged in the towers; these bio-blocks can be formed as a netting of for instance plastic whereby a large surface area is available for the micro-organisms.

The active, oxygen-rich washing liquid coming out of the last aerating tower is returned to the spray devices in order to further participate in the circuit process.

Among the favourable effects obtained by the invention, it can be stated as extremely important for the environment that measurements have demonstrated that, in an animal shed as according to figure 2 with the details of figures 4-6 and with the aerating tower of figure 8, a reduction of ammonia emission is obtained of 98% compared with a conventional accommodation area in the same animal shed without special steps for protection of the environment.

It may also be remarked that an aerating device as described here can be applied in extremely favourable manner in an animal shed, but that such a device can also be used for entirely different purposes, for instance aerating water in a fish farm.

It will be apparent that washing liquid coming from the manure collection space which is transported away by pipe 13 does not necessarily have to be carried over the sieve conveyor belt but can be guided directly to the feed side of the pump in order to be aerated in the towers and thereafter guided back to the sprayers. The washing liquid must herein be prevented from containing too large solid particles as the sprayers may otherwise become blocked.

The solid manure constituents taken out of the washing liquid onto the sieve conveyor belt are transported under a cover 70 with a fan 88 received therein. The cover of the fan can connect sealingly onto the sieve conveyor belt; the pressure difference between the top side and bottom side of the belt therein causes a maximal liquid separation. Placed between the reciprocating portions 71 and 72 of the conveyor belt are sprayers 73 for removing manure that has remained behind from the sieving sheet of the conveyor belt. Placed under the returning portion 72 of the conveyor belt is a collection tray 74 which carries the washing liquid back to compartment 86 via a conduit 75. On the end of the sieve conveyor belt 61 the manure is removed by means of a scraper 76. In the embodiment shown in figure 8 the manure is collected in a chute 77 and fed to a screw conveyor 78. This latter comprises a perforated tube 79 in which is received a worm 80 of decreasing pitch for the purpose of further discharge of any moisture still present. At the end of the screw conveyor can be situated a pellet press, for example a pellet press as shown in figure 10. The pellets 82 formed herewith are guided via a collecting container 83 and a conveyor belt 84 to a drying conveyor 85 arranged in the shed for definitive drying of the pellets. The drying conveyor 85 preferably runs in the vicinity of the air inlet openings (not shown) in the shed walls 33.

Instead of the screw conveyor 78 provided with perforations a pressing member can also be used to which a tube of for instance sieving sheet is connected, optionally enclosed by metal gauze. A tube of metallic weave can also be used or a hose resistant to great pressure of a material that is used for fire hoses, which hose is provided with perforations which in operative situation have a diameter in the order of magnitude of 30 to 80 micrometers. Pressing out of liquid from the solid substance of the manure works extremely effectively here. This tube is moreover flexible and the outlet end can be placed at a random location.

In the above described pressing out of liquid from the thick manure prior to the pellets being pressed, the liquid carries with it, among other things, minerals from the thick manure, which is less favourable for the quality of the pellet manure. It can therefore be advantageous not to press out the thick fraction of the manure coming from the sieving conveyor but to carry it to a drying conveyor belt where liquid will evaporate but the active substances are preserved in the manure. This is not shown in the drawing. The drying conveyor could be arranged close to the top of and along a wall 33 of a central pathway (see figure 2), this on the side above the stalls where air (see arrow 39) is admitted. Having arrived at the end of the drying belt the pre-dried thick fraction is carried to a pellet press, for instance the press shown in figure 10. The pressed pellets can now be further dried on a further drying conveyor similar to the first described which is arranged close to the opposite wall of the central pathway and which is also subjected to the effect of inflowing air 14. In addition to preserving the active substances in the manure, the important advantage results that drying involves no energy costs whatever.

The pellet press shown in figure 10 has a housing 100 in which a transport screw 103 is rotatable. The pre-dried manure is fed by a feed member designated schematically with 102. A drive for the transporting screw can be present at 108. A disc 105 provided with openings 106 the size of the desired pellets is held in place by a closing member 107. Against the disc 105 is pressed a cutting knife 104 which rotates together with the transport screw. This pellet press is highly suitable for use in the animal shed; it also lends itself to use elsewhere. The drive need only be of small power. Through use of the cutting knife elements present in the manure such as hairs of the animals are continuously cut through so that the feared blockage of the pellet press cannot occur. The price also compares very favourably with that of usual pellet presses.

The possibility is present of processing the solid manure constituents in a fermenting installation. Biogas is herein formed from the thick fraction of the manure. This biogas can be used as fuel for a gas motor or a gas turbine with which the pump could be driven. Operations thus take place with even more energy-saving. In addition, the heat released during cooling of the motor and the heat of the exhaust gases can be utilized for holding the washing liquid at the desired temperature. This can be particularly favourable in winter, as the washing liquid is hereby heated in a manner economical of energy. The motor could of course also use for instance natural gas or LPG as fuel. Normal combustion motors could also be employed.

Figures 9a and 9b show an alternative manner of aerating the washing liquid. Figure 9a corresponds to a great extent with the section shown in figure 4. No sprayers 36 are shown here above the manure collection space.

In the manure collection space 4 a tube 92 is placed in the washing liquid 35 provided with a large number of small outflow openings 93. The intake side of tube 92 is connected to a pump unit similar to the one described with reference to the aerating towers of figure 8. Designated with 94, see figure 9b, is a pump, for instance a centrifugal or impeller pump, located below the liquid level 97 of a liquid reservoir. Accommodated in the feed pipe 99 for washing liquid is a control valve with the same purpose as described for the valve 90 present in the aerating tower of figure 8. The air inlet 96 is situated between the control valve and the intake side 95 of the pump. The washing liquid provided with a large number of small air bubbles flows out of the openings 93 of tube 92 into the layer of washing liquid 35 and there provides an intensive aerating treatment of washing liquid.

The invention is described with reference to an animal shed, for example for pigs. It will be apparent that an animal shed according to the invention is also favourable for other animals such as for instance cows.

## Claims

1. Method for treating discharge air from an animal shed and processing washing liquid, at least part of which is located in a manure collection space (4), which is situated under a stall (2) in a accomodation area(s) for the animals and communicates therewith by means of a grid (34) in the floor (47) of the stall (2), by passing the discharge air from the accomodation area(s) through a spray range of washing liquid, which spray range is located outside the stall (2) for the animals, for cleaning the discharge air by the washing liquid (35) and aerating and oxygen enriching the washing liquid (35), after which at least part of the cleaned air is transported to the outside and at least part of the oxygen enriched washing liquid is transported through the manure collection space (4).

2. Animal shed, for instance for pigs, comprising at least one accommodation area with at least one stall (2) for the animals, which stall communicates by means of a grid (34) in the floor (47) of the stall (2) with a manure collection space (4), in which a layer of washing liquid (35) is contained, characterized by means for passing discharge air from the accomodation area(s) having passed through the stall (2) through the spray range of means for spraying the washing liquid (35), which spray means are located outside the stall (2), means for transporting at least part of the air, which has passed through the spray range, to the outside and means for transporting at least part of the sprayed washing liquid (35) through the manure collection space (4).

3. Animal shed as claimed in claim 2, **characterized in that** the means for spraying comprise a number of spray devices (36) connected in series one after another.

4. Animal shed as claimed in any of the foregoing claims, **characterized in that** this is provided with means for discharging air out of the shed and means for supplying fresh air to the shed.

5. Animal shed as claimed in one or more of the claims 2-4, **characterized in that** in the shed one or more spray devices (36) is (are) present in the manure collection space (4), lower than the grid (34) but above the washing liquid (35), which spray device(s) (36) cover a spray range in the manure collection space (4) over a substantial part of the surface of the manure collection space (4), preferably over practically the whole surface thereof.

6. Animal shed as claimed in claim 5, **characterized in that** a portion of the grid (34) is covered by a mat of thin material such as a rubber mat, which can be heated by discharge air flowing under the mat.

7. Animal shed as claimed in any of the claims 2-6, **characterized in that** at least one spray device (50) for the washing liquid (35) is disposed in an air discharge space which is connected to the accommodation area of the animals and preferably to the manure collection space (4).

8. Animal shed as claimed in claim 7, **characterized in that** the sprayed washing liquid (35) also provides a supply of washing liquid (35) to the manure collection space (4).

9. Animal shed as claimed in claim 7 or 8, wherein in at least one accommodation area a number of stalls connect onto a working passage, **characterized in that** the air discharge space is situated at least partially under the working passage (38).

10. Animal shed as claimed in claim 7 or 8, **characterized in that** the air discharge space is situated in a space on the outside of the animal shed connected to the accommodation area.

11. Animal shed as claimed in claim 7 or 8, wherein a number of adjacently located accommodation areas for the animals connect onto a collective main pathway, **characterized in that** the air discharge space is situated in or below the main pathway.

12. Animal shed as claimed in one or more of the claims 5-11, **characterized in that** means are present, for instance an exhaust installation, for carrying the air through the washing liquid (35) of one or more spray devices in the manure collection space (4) and for subsequently carrying the air through the washing liquid (35) from one or more spray devices of one or more of the connecting air discharge spaces.

13. Animal shed as claimed in any of the claims 4-12, **characterized in that** supply of air proceeds via a system of pipes (21) and discharge of air proceeds through a space (22) enclosing the pipes, wherein supplied air and discharge air are preferably carried in opposing directions.

14. Animal shed as claimed in any of the claims 4-12, **characterized in that** a tunnel or tunnel system located in the ground is present via which the supply of air takes place.

15. Animal shed as claimed in claim 13 or 14, **characterized in that** the pipe system is located in one or more of the air discharge spaces as claimed in claims 9-11 and optionally below the grid (34).

16. Animal shed as claimed in claim 13, 14 or 15, **characterized in that** one or more spray devices (50) for washing liquid (35) is/are present in the space around the pipes (21), preferably above the pipes.

17. Animal shed as claimed in any of the claims 4-16, **characterized in that** the supplied air and/or the discharge air are also carried through at least one heat exchanger (46).

18. Animal shed as claimed in one or more of the claims 2-17, **characterized in that** means are present to execute the supply of washing liquid (35) to the spray device(s) in a substantially continuous process.

19. Animal shed as claimed in any of the foregoing claims, **characterized in that** the washing liquid (35) is obtained at least partially and preferably practically entirely using means for separating the thin fraction out of the manure produced by the animals and for subjecting the separated thin fraction to an oxygen enriching process.

20. Animal shed as claimed in one or more of the foregoing claims, **characterized in that** circulation means for washing liquid (35) are present which deliver washing liquid in a circuit to at least one collection space (57) for manure and drain washing liquid present there to an oxygen-enriching device, and which return washing liquid treated in this device to a relevant collection space (4).

21. Animal shed as claimed in any of the foregoing claims, **characterized in that** the circulation means circulate the washing liquid (35) in a circuit in a substantially continuous process.

22. Animal shed as claimed in claim 20 and/or 21, **characterized in that** the collection space(s) is (are) formed by at least one manure collection space communicating with a stall (2).

23. Animal shed as claimed in one or more of the claims 20-22, **characterized in that** a collection space (57) for manure forms part of a separating device for removing and/or sieving solid constituents carried along with the washing liquid (35).

24. Animal shed as claimed in one or more of the claims 20-22, **characterized in that** a separating device as claimed in claim 24 is incorporated in the washing liquid path prior to the oxygen-enriching device.

25. Animal shed as claimed in any of the claims 20-24, **characterized in that** at least one spray device is incorporated in the circulation path, which spray device is also the means for placing air into intimate contact with washing liquid (35) as claimed in one or more of the claims 2-19.

26. Animal shed as claimed in one or more of the claims 2-25, **characterized in that** the circulation means carry the washing liquid (35) over or through at least a substantial portion of at least one collection space (4).

27. Animal shed as claimed in one or more of the claims 2-26, **characterized in that** the circulation means contain means, for instance an overflow, for draining substantially only an upper layer of the washing liquid (35) and manure present in the manure collection space (4).

28. Animal shed as claimed in one or more of the claims 2-27, **characterized in that** the feed of washing liquid (35) to the manure collection space (4) takes place using a conduit provided with outlet openings which is located in a washing liquid (35)-containing layer of the manure collection space (4).

29. Animal shed as claimed in one or more of the claims 2-27, **characterized in that** the feed takes-place by means of a spray device.

30. Animal shed as claimed in one or more of the claims 2-29, **characterized in that** feed takes place by running off washing liquid (35) from another part of the circuit to a collection space (4) for manure.

31. Animal shed as claimed in one or more of the claims 2-29, **characterized in that** means are present for periodically washing or sucking away at least a large portion of the underlying settled part of the manure and feeding thereof to the separating device.

32. Animal shed as claimed in one or more of the claims 21-25, **characterized in that** the circulation means circulate the washing liquid (35) in the manure collection space (4) such that practically all solid constituents are carried away.

33. Animal shed as claimed in claim 32, **characterized in that** the manure collection spaces of successive stalls for animals of at least one or more adjacently located accommodation areas are mutually connected as a continuous channel, and that a collective drain for washing liquid (35) and manure constituents is provided for the connected manure collection spaces on at least one side of the channel, preferably at both outer ends of the channel, in which case the one drain and the other drain are opened alternatingly.

34. Animal shed as claimed in one or more of the foregoing claims, **characterized in that** means are provided for activating washing liquid (35), which means subject washing liquid in a circuit travelled by the washing liquid to an oxygen-enriching device, such as an aerating device, and to further activating means which stimulate the activity of micro-organisms for the degrading of harmful substances originating from the manure, such as ammonia.

35. Animal shed as claimed in claim 34, **characterized in that** the further activating means comprise bringing washing liquid into contact with a source of micro-organisms, such as active sludge, present in the washing liquid circuit, preferably in the manure collection space(s).

36. Animal shed as claimed in claim 34 and/or 35, **characterized in that** the activating means comprise at least one substrate, preferably of relatively large surface area, such as a bio-block, as a growth environment for micro-organisms in the circuit travelled by the washing liquid.

37. Animal shed as claimed in one or more of the claims 34-36, **characterized in that** the activating means stimulate the activity of nitrifying bacteria.

38. Animal shed as claimed in one or more of the claims 34-37, **characterized in that** the aerating device comprises the further activating means in the form of a substrate arranged therein, preferably in the form of a bio-block.

39. Animal shed as claimed in one or more of the claims 2-38, **characterized in that** the said means are arranged preferably in the form of a substrate in a space in which at least one spray device for washing liquid is situated, such as for instance an air discharge space.

40. Animal shed as claimed in claim 39, **characterized in that** in the space (22) enclosing a pipe system (21), wherein at least one spray device (50) is situated, a layer with nitrifying bacteria is present at least on the pipes.

41. Animal shed as claimed in one or more of the claims 34-40, **characterized in that** in the washing liquid circuit is included at least one collection space for supply and discharge of manure produced by the animals in which washing liquid is contained preferably the manure collection space and/or a separating device.

42. Animal shed as claimed in one or more of the foregoing claims, **characterized in that** activating means are present for furthering the activity of denitrifying bacteria.

43. Animal shed as claimed in one or more of the claims 34-41, **characterized in that** in the circulation system for washing liquid at least one anaerobe zone is preserved for denitrifying bacteria, preferably in a manure collection space (4).

44. Animal shed as claimed in one or more of the claims 34-43, **characterized in that** nitrification is stimulated by circulating washing liquid in a substantially continuous process in a circuit containing an aerating device and possibly a manure collection space.

45. Animal shed as claimed in one or more of the claims 34-42, **characterized in that** circulation means are present to circulate washing liquid in a substantially continuous process in a circuit, preferably making use of the circulation system as claimed in one or more of the claims 21-33.

46. Animal shed as claimed in claims 18, 21 and 45, **characterized in that** at least two and preferably three of the means mentioned therein are employed simultaneously in a practically continuous process.

47. Animal shed as claimed in any of the claims 19-46, **characterized in that** the oxygen-enriching installation is formed by an aerating device preferably disposed inside the animal shed.

48. Animal shed as claimed in claim 47, **characterized in that** the aerating device is formed by a pump which feeds a liquid/air mixture to an aerating tower (65).

49. Animal shed as claimed in one or more of the claims 47-48, **characterized in that** the aerating tower (65) comprises a number of elongate closed holders connected in series, preferably at least three holders, each having close to their underside a liquid inlet and close to their top side a liquid outlet, wherein the liquid inlet of at least the first holder is provided with means for admixing air into the liquid.

50. Animal shed as claimed in one or more of the claims 47-49, **characterized in that** liquid and air are mixed using a pump, wherein the feed pipe of the liquid to the pump is provided forward of the suction side of the pump with an air inlet, wherein a control valve for the liquid is preferably arranged in the feed pipe for the liquid forward of the air inlet.

51. Animal shed as claimed in one or more of the claims 47-50, **characterized in that** in the aerating device bio-blocks are arranged formed as a netting of large surface area of for instance plastic onto which micro-organisms can deposit themselves in order to activate aerated washing liquid.

52. Animal shed as claimed in any of the foregoing claims, **characterized in that** a manure processing facility is placed preferably in, optionally close to, the animal shed.

53. Animal shed as claimed in any of the foregoing claims, **characterized in that** a separating device is present which comprises a collecting tank for manure having at least two compartments effectively separated from each other by an inclined conveyor belt located partly below the liquid surface and provided with sieving means such as sieving sheet or gauze for removing solid manure constituents from the one compartment and allowing through sieved thin fraction to the other compartment, and that means are provided for removing the solid manure constituents from the conveyor belt.

54. Animal shed as claimed in claim 53, **characterized in that** above the part of the sieving means protruding above the liquid surface are arranged means for removing the excess liquid from the sieved manure constituents, which means are preferably formed by a fan.

55. Animal shed as claimed in any of the claims 52-54, **characterized in that** means are present for removing concentrated manure constituents, for example a scraper, which concentrated manure constituents are fed to a moisture extracting member for further reducing the moisture content, such as a tube whereof the wall is provided with openings allowing through only the moisture and wherein means are present for through-feed under pressure of the concentrated constituents.

56. Animal shed as claimed in claim 55, **characterized in that** the tube is formed from a fine-mesh sieving sheet, optionally strengthened with a metal gauze enclosing this sheet, or from woven metal gauze or from a material suitable for a fire hose, which hose is provided with perforations.

57. Animal shed as claimed in claim 55 or 56, **characterized in that** the concentrated constituents are processed by a pellet press which debouches onto a drying conveyor belt which preferably runs along air inflow openings in the farm building.

58. Animal shed as claimed in claim 57, **characterized in that** the pellet press contains a housing in which is received a through-feed member, such as a screw conveyor, which presses the material through openings arranged in a disc and having the size of the desired pellets, against which disc is pressed a cutting knife driven rotatably by the screw conveyor.

59. Animal shed as claimed in any of the claims 52-54 and 57, 58, **characterized in that** means are present for removing concentrated manure constituents, feed means for guiding the concentrated manure constituents to a drying conveyor belt which preferably runs along air inflow openings in the farm building, that the pre-dried constituents are processed to pellets by a pellet press, preferably the pellet press according to claim 58, and that the pellets are carried away over a further drying conveyor belt preferably running past air inflow openings in the farm building for definitive drying.

60. Animal shed as claimed in any of the claims 48-59, **characterized in that** the driving of the pump takes place by means of a heat motor, preferably a gas motor or gas turbine, wherein heat from cooling and/or heat of the exhaust gases can be utilized for maintaining a desired temperature of the washing liquid.

## Patentansprüche

1. Verfahren zur Behandlung von Abluft aus einem Stall und zum Behandeln von Waschflüssigkeit, von dem mindestens ein Teil in einem Dungsammelraum (4) stattfindet, der unterhalb eines Stellplatzes (2) in (einem) Aufenthaltsbereich(en) für die Tiere angeordnet ist und mit diesem über ein Gitter (34) im Boden (47) des Stellplatzes (2) kommuniziert, wobei die Abluft von dem Aufenthaltsbereich (4) durch einen Sprühbereich für Waschflüssigkeit geleitet wird, der sich außerhalb des Stellplatzes (2) für die Tiere befindet, um die Abluft durch die Waschflüssigkeit (35) zu reinigen und die Waschflüssigkeit (35) zu belüften und mit Sauerstoff anzureichern, wonach mindestens ein Teil der gereinigten Luft nach außen abgeführt und mindestens ein Teil der sauerstoffangereicherten Waschflüssigkeit durch den Dungsammelraum (4) transportiert wird.

2. Stall, insbesondere für Schweine, mit mindestens einem Aufenthaltsbereich mit mindestens einem Stellplatz (2) für die Tiere, wobei der Stellplatz mittels eines Gitters (34) im Boden (47) des Stellplatzes (2) mit einem Dungsammelraum (4) kommuniziert, in dem eine Schicht aus Waschflüssigkeit (35) enthalten ist,
**gekennzeichnet** durch eine Einrichtung zum Hindurchleiten von Abluft aus dem (den) Aufenthaltsbereich(en) durch den Sprühbereich einer Einrichtung zum Versprühen der Waschflüssigkeit (35), wobei die Sprüheinrichtung außerhalb des Stellplatzes (2) angeordnet ist, eine Einrichtung zum Transportieren mindestens eines Teils der Luft, die den Sprühbereich durchlaufen hat, nach außen und einer Einrichtung zum Transportieren mindestens eines Teils der versprühten Waschflüssigkeit (35) durch einen Dungsammelraum (4).

3. Stall nach Anspruch 2,
dadurch **gekennzeichnet,** daß die Sprüheinrichtung eine Anzahl von Sprühvorrichtungen (36) aufweist, die in Serie hintereinander geschaltet sind.

4. Stall nach einem der vorangehenden Ansprüche,
dadurch **gekennzeichnet,** daß er mit einer Einrichtung zum Abführen von Luft aus dem Stall und zum Zuführen von Frischluft zu dem Stall versehen ist.

5. Stall nach einem oder mehreren der Ansprüche 2 bis 4,
dadurch **gekennzeichnet,** daß in dem Stall eine oder mehrere Sprühvorrichtungen (36) in dem Dungsammelraum (4) unterhalb des Gitters (34), aber oberhalb der Waschflüssigkeit (35), vorhanden sind, die einen Sprühbereich in dem Dungsammelraum (4) über einem wesentlichen Teil der Oberfläche des Dungsammelraums (4), vorzugsweise über praktisch dessen gesamter Oberfläche, abdecken.

6. Stall nach Anspruch 5,
dadurch **gekennzeichnet,** daß ein Teil des Gitters (34) mit einer hatte aus dünnem Material, wie zum Beispiel einer Gummimatte, abgedeckt ist, die durch unter der hatte strömende Abluft erwärmbar ist.

7. Stall nach einem der Ansprüche 2 bis 6,
dadurch **gekennzeichnet,** daß mindestens eine Sprühvorrichtung (50) für die Waschflüssigkeit (35) in einem Luftabführraum angeordnet ist, der mit dem Aufenthaltsbereich für die Tiere und vorzugsweise mit dem Dungsammelraum (4) verbunden ist.

8. Stall nach Anspruch 7,
dadurch **gekennzeichnet,** daß die versprühte Waschflüssigkeit (35) auch eine Zufuhr von Waschflüssigkeit (35) zum Dungsammelraum (4) liefert.

9. Stall nach Anspruch 7 oder 8,
bei dem in mindestens einem Aufenthaltsbereich eine Anzahl von Stellplätzen mit einem Bedienungsdurchgang in Verbindung stehen,
dadurch **gekennzeichnet,** daß der Luftabführraum mindestens teilweise unter dem Bedienungsdurchgang (3) angeordnet ist.

10. Stall nach Anspruch 7 oder 8,
dadurch **gekennzeichnet,** daß der Luftabführraum in einem Raum außerhalb des Stalls angeordnet ist, der mit dem Aufenthaltsbereich verbunden ist.

11. Stall nach Anspruch 7 oder 8,
bei dem eine Anzahl von nebeneinander angeordneten Aufenthaltsbereichen für die Tiere mit einem gemeinsamen Hauptgang in Verbindung stehen,
dadurch **gekennzeichnet**, daß der Luftabführraum in oder unter dem Hauptgang angeordnet ist.

12. Stall nach einem oder mehreren der Ansprüche 5 bis 11,
dadurch **gekennzeichnet,** daß eine Einrichtung, z.B. eine Absauganlage, zum Fördern der Luft durch die Waschflüssigkeit (35) einer oder mehrerer Sprühvorrichtungen in dem Dungsammelraum (4) und zum anschließenden Fördern der Luft durch die Waschflüssigkeit (35) von einer oder mehreren Sprühvorrichtungen einer oder mehrerer der angeschlossenen Luftsammelräume vorgesehen ist.

13. Stall nach einem der Ansprüche 4 bis 12,
dadurch **gekennzeichnet,** daß die Luftzufuhr über ein Rohrleitungssystem (31) und die Luftabfuhr über einen die Rohr-Leitungen umschließenden Raum (22) erfolgt, wobei Zu-Luft und Abluft vorzugsweise in entgegengesetzten Richtungen gefördert werden.

14. Stall nach einem der Ansprüche 4 bis 12,
dadurch **gekennzeichnet**, daß ein unterirdischer Tunnel oder Tunnelsystem vorgesehen ist, in dem die Luftzufuhr stattfindet.

15. Stall nach Anspruch 13 oder 14,
dadurch **gekennzeichnet,** daß das Rohr-Leitungssystem in einem oder mehreren der Luftabführräume gemäß Anspruch 9 bis 11 und vorzugsweise unterhalb des Gitters (34) angeordnet ist.

16. Stall nach Anspruch 13, 14 oder 15,
dadurch **gekennzeichnet,** daß eine oder mehrere Sprühvorrichtungen (50) für Waschflüssigkeit (35) in dem die Rohr-Leitungen (21) umgebenden Raum, vorzugsweise oberhalb der Leitungen, angeordnet sind.

17. Stall nach einem der Ansprüche 4 bis 16,
dadurch **gekennzeichnet,** daß die Zuluft und/oder die Abluft auch durch mindestens einen Wärmetauscher (46) geleitet wird.

18. Stall nach einem oder mehreren der Ansprüche 2 bis 17,
dadurch **gekennzeichnet**, daß Mittel zum Durchführen der Zufuhr von Waschflüssigkeit (35) zu den Sprühvorrichtungen in einem im wesentlichen kontinuierlichen Prozeß vorgesehen sind.

19. Stall nach einem der vorangehenden Ansprüche,
dadurch **gekennzeichnet,** daß die Waschflüssigkeit (35) mindestens teilweise und vorzugsweise praktisch vollständig mittels einer Einrichtung zum Abtrennen der Dünnfraktion aus dem von den Tieren erzeugten Dung und zum Durchführen einer Sauerstoffanreicherung der abgetrennten Dünnfraktion erhalten wird.

20. Stall nach einem oder mehreren der vorangehenden Ansprüche,
dadurch **gekennzeichnet,** daß Umwälzmittel für Waschflüssigkeit (35) vorgesehen sind, die Waschflüssigkeit in einem Kreislauf mindestens einem Dungsammelraum (37) zuführen und dort vorhandene Waschflüssigkeit zu einer Sauerstoffanreicherungseinrichtung abziehen und in dieser Einrichtung behandelte Waschflüssigkeit einem entsprechenden Sammelraum (4) zuführen.

21. Stall nach einem der vorangehenden Ansprüche,
dadurch **gekennzeichnet,** daß die Umwälzeinrichtung die Waschflüssigkeit (35) in einem Kreislauf im wesentlichen kontinuierlich umwälzt.

22. Stall nach Anspruch 20 und/oder 21,
dadurch **gekennzeichnet,** daß der oder die Sammelräume von mindestens einem Dungsammelraum gebildet wird, der mit einem Stellplatz (2) kommuniziert.

23. Stall nach einem oder mehreren der Ansprüche 20 bis 22,
dadurch **gekennzeichnet,** daß ein Dungsammelraum (57) einen Teil einer Trenneinrichtung zum Entfernen und/oder Absieben von mit der Waschflüssigkeit mitgeführten Feststoffen bildet.

24. Stall nach einem oder mehreren der Ansprüche 20 bis 22,
dadurch **gekennzeichnet,** daß eine Trennvorrichtung gemäß Anspruch (24) in den Weg der Waschflüssigkeit vor der Sauerstoffanreicherungseinrichtung eingefügt ist.

25. Stall nach einem der Ansprüche 20 bis 24,
dadurch **gekennzeichnet,** daß mindestens eine Sprühvorrichtung in den Kreislauf eingefügt ist, wobei die Sprühvorrichtung auch die Einrichtung, die die Luft in innigem Kontakt mit der Waschflüssigkeit (35) bringt, gemaß einem oder mehreren der Ansprüche 2 bis 19 ist.

26. Stall nach einem oder mehreren der Ansprüche 2 bis 25,
dadurch **gekennzeichnet,** daß die Umwälzeinrichtung die Waschflüssigkeit (35) über oder durch mindestens einen wesentlichen Teil mindestens eines Sammelraumes (4) fördert.

27. Stall nach einem oder mehreren der Ansprüche 2 bis 26,
dadurch **gekennzeichnet,** daß die Umwälzeinrichtung Mittel, zum Beispiel einen Überlauf, zum Abziehen im wesentlichen nur einer oberen Schicht der Waschflüssigkeit (35) und des Dungs, die in dem Dungsammelraum (4) vorhanden sind, aufweist.

28. Stall nach einem oder mehreren der Ansprüche 2 bis 27,
dadurch **gekennzeichnet,** daß die Zufuhr von Waschflüssigkeit (35) zum Dungsammelraum (4) unter Verwendung einer mit Auslaßöffnungen versehenen Leitung erfolgt, die in einer Waschflüssigkeit (35) enthaltenden Schicht des Dungsammelraums (4) angeordnet ist.

29. Stall nach einem oder mehreren der Ansprüche 2 bis 27,
dadurch **gekennzeichnet,** daß die Zufuhr mittels einer Sprühvorrichtung erfolgt.

30. Stall nach einem oder mehreren der Ansprüche 2 bis 29,
dadurch **gekennzeichnet,** daß die Zufuhr dadurch erfolgt, daß Waschflüssigkeit von einem anderen Teil des Kreislaufs zu einem Dungsammelraum (4) abgezogen wird.

31. Stall nach einem oder mehreren der Ansprüche 2 bis 29,
dadurch **gekennzeichnet,** daß Mittel für das periodische Waschen oder Absaugen mindestens eines großen Teils der abgesetzten unteren Schicht des Dungs und zu ihrer Zuführung einer Trennvorrichtung vorhanden sind.

32. Stall nach einem oder mehreren der Ansprüche 21 bis 25,
dadurch **gekennzeichnet,** daß die Umwälzeinrichtung die Waschflüssigkeit (35) in dem Dungsammelraum (4) so umwalzt, daß praktisch alle festen Bestandteile wegbefördert werden.

33. Stall nach Anspruch 32,
dadurch **gekennzeichnet,** daß die Dungsammelräume von aufeinanderfolgenden Stellplätzen für Tiere von mindestens einem oder mehreren benachbarten Aufenthaltsbereichen miteinander als ein durchgehender Kanal verbunden sind und daß ein gemeinsamer Abzug für Waschflüssigkeit (35) und Dungbestandteile für die angeschlossenen Dungsammelräume an mindestens einer Seite des Kanals vorgesehen ist, vorzugsweise an den beiden äußeren Enden des Kanals, wobei in diesem Fall der eine und der andere Abzug abwechselnd geöffnet werden.

34. Stall nach einem oder mehreren der vorangehenden Ansprüche,
dadurch **gekennzeichnet**, daß Mittel vorgesehen sind zum Aktivieren von Waschflüssigkeit (35), die die Waschflüssigkeit in einen Kreislauf bringen, in dem die Waschflüssigkeit eine Sauerstoffanreicherungseinrichtung, wie zum Beispiel eine Belüftungseinrichtung, und weitere Aktivierungseinrichtungen durchläuft, die die Aktivität von Mikroorganismen für den Abbau von aus dem Dung stammenden Schadstoffen wie z.B. Ammoniak, stimulieren.

35. Stall nach Anspruch 34,
dadurch **gekennzeichnet,** daß weitere Aktivierungsmittel darin bestehen, daß Waschflüssigkeit in Kontakt mit einer Quelle von Mikroorganismen, wie z.B. Belebtschlamm, gebracht wird, die in dem Kreislauf der Waschflüssigkeit, vorzugsweise in dem oder den Dungsammelräumen vorgesehen ist.

36. Stall nach Anspruch 34 und/oder 35,
dadurch **gekennzeichnet,** daß die Aktivierungsmittel mindestens ein Substrat, vorzugsweise mit großer Oberfläche, wie z.B. einen Bioblock, als Wachstumsumgebung für Mikroorganismen in dem von der Waschflüssigkeit durchlaufenden Kreislauf enthalten.

37. Stall nach einem oder mehreren der Ansprüche 34 bis 36,
dadurch **gekennzeichnet,** daß die Aktivierungsmittel die Aktivität von nitrifizierenden Bakterien stimulieren.

38. Stall nach einem oder mehreren der Ansprüche 34 bis 37,
dadurch **gekennzeichnet,** daß die Belüftungseinrichtung die weiteren Aktivierungsmittel in Form eines darin angeordneten Substrats, vorzugsweise in Form eines Bioblocks, enthält.

39. Stall nach einem oder mehreren der Ansprüche 2 bis 38,
dadurch **gekennzeichnet,** daß die Mittel vorzugsweise in Form eines Substrats in einem Raum angeordnet sind, in der sich mindestens eine Sprühvorrichtung für Waschflüssigkeit befindet, wie z.B. ein Luftabführraum.

40. Stall nach Anspruch 39,
dadurch **gekennzeichnet,** daß in dem ein Rohr-Leitungssystem (21) umschließenden Raum (22), in dem mindestens eine Sprühvorrichtung (50) angeordnet ist, eine Schicht mit nitrifizierenden Bakterien mindestens auf den Rohr-Leitungen vorhanden ist.

41. Stall nach einem oder mehreren der Ansprüche 34 bis 40,
dadurch **gekennzeichnet,** daß im Waschflüssigkeitskreislauf mindestens ein Sammelraum für die Zufuhr und Abfuhr von von den Tieren erzeugtem Dung, in dem Waschflüssigkeit enthalten ist, angeordnet ist, vorzugsweise der Dungsammelraum und/oder eine Trennvorrichtung.

42. Stall nach einem oder mehreren der vorangehenden Ansprüche,
dadurch **gekennzeichnet**, daß Aktivierungsmittel zum Fördern der Aktivität von denitrifizierenden Bakterien vorgesehen sind.

43. Stall nach einem oder mehreren der Ansprüche 34 bis 41,
dadurch **gekennzeichnet,** daß in dem Umwälzsystem für Waschflüssigkeit mindestens eine anaerobe Zone für denitrifizierende Bakterien aufrechterhalten wird, vorzugsweise in einem Dungsammelraum (4).

44. Stall nach einem oder mehreren der Ansprüche 34 bis 43,
dadurch **gekennzeichnet,** daß die Nitrifizierung dadurch stimuliert wird, daß Waschflüssigkeit in einem im wesentlichen kontinuierlichen Prozeß in einem Kreislauf umgewälzt wird, der eine Belüftungsvorrichtung und ggf. einen Dungsammelraum enthält.

45. Stall nach einem oder mehreren der Ansprüche 34 bis 42,
dadurch **gekennzeichnet,** daß Umwälzmittel vorgesehen sind zum Umwälzen von Waschflüssigkeit in einem im wesentlichen kontinuierlichen Prozeß in einem Kreislauf, vorzugsweise unter Verwendung des Kreislaufsystems gemäß einem oder mehreren der Ansprüche 21 bis 33.

46. Stall nach Anspruch 18, 21 und 45,
dadurch **gekennzeichnet,** daß mindestens zwei und vorzugsweise drei der darin genannten Mittel gleichzeitig in einem praktisch kontinuierlichen Prozeß betrieben werden.

47. Stall nach einem der Ansprüche 19 bis 46,
dadurch **gekennzeichnet,** daß die Sauerstoffanreicherungsanlage durch eine Belüftungsvorrichtung gebildet ist, die vorzugsweise innerhalb des Stalls angeordnet ist.

48. Stall nach Anspruch 47,
dadurch **gekennzeichnet,** daß die Belüftungsvorrichtung durch eine Pumpe gebildet wird, die eine Flüssigkeit/Luftmischung einem Belüftungsturm (65) zuführt.

49. Stall nach einem oder mehreren der Ansprüche 47 bis 48,
dadurch **gekennzeichnet,** daß der Belüftungsturm (65) eine Anzahl von langgestreckten geschlossenen, in Serie geschalteten Behältern aufweist, vorzugsweise mindestens drei Behälter, von denen jeder nahe seiner Unterseite einen Flüssigkeitseinlaß und nahe seiner Oberseite einen Flüssigkeitsauslaß hat, wobei der Flüssigkeitseinlaß mindestens des ersten Behälters mit Mitteln zum Zumischen von Luft in die Flüssigkeit versehen ist.

50. Stall nach einem oder mehreren der Ansprüche 47 bis 49,
dadurch **gekennzeichnet,** daß Flüssigkeit und Luft mittels einer Pumpe gemischt werden, wobei die Flüssigkeitszuführleitung zur Pumpe stromauf der Saugseite der Pumpe mit einem Lufteinlaß versehen ist, wobei ein Steuerventil für die Flüssigkeit vorzugsweise in der Flüssigkeitszuführleitung stromauf des Lufteinlasses angeordnet ist.

51. Stall nach einem oder mehreren der Ansprüche 47 bis 50,
dadurch **gekennzeichnet,** daß in der Belüftungsvorrichtung Bioblöcke angeordnet sind, die als Netzwerk mit großer Oberfläche aus z.B. Kunststoff gebildet sind, auf denen sich Mikroorganismen ansiedeln können, um belüftete Waschflüssigkeit zu aktivieren.

52. Stall nach einem der vorangehenden Ansprüche,
dadurch **gekennzeichnet,** daß eine Dungbehandlungseinrichtung vorzugsweise in oder wahlweise nahe dem Stall angeordnet ist.

53. Stall nach einem der vorangehenden Ansprüche,
dadurch **gekennzeichnet,** daß eine Trennvorrichtung vorgesehen ist, die einen Sammeltank für Dung aufweist, der mindestens zwei Abteilungen hat, die voneinander durch ein geneigtes Förderband betrieblich getrennt sind, das teilweise unterhalb der Flüssigkeitsoberfläche angeordnet ist und mit Siebeeinrichtungen, wie z.B. Siebblech oder Siebgewebe versehen ist zum Entfernen von festen Dungbestandteilen aus der einen Abteilung und zum Durchlassen von gesiebter Dünnfraktion zu der anderen Abteilung, und daß Mittel vorgesehen sind zum Entfernen der festen Dungbestandteile von dem Förderband.

54. Stall nach Anspruch 53,
dadurch **gekennzeichnet,** daß oberhalb des über die Flüssigkeitsoberfläche ragenden Teils der Siebeinrichtung Mittel zum Entfernen von Überschußflüssigkeit aus den gesiebten Dungbestandteilen angeordnet sind, die vorzugweise von einem Gebläse gebildet werden.

55. Stall nach einem der Ansprüche 52 bis 54,
dadurch **gekennzeichnet,** daß Mittel zum Entfernen von konzentrierten Dungbestandteilen vorgesehen sind, beispielsweise ein Schaber, wobei die konzentrierten Dungbestandteile einer Entwässerungseinrichtung zur weiteren Reduzierung des Wassergehaltes zugeführt werden, wie z.B. ein Rohr, dessen Wand Öffnungen aufweist, die lediglich das Wasser durchlassen, und wobei Mittel vorgesehen sind für die Hindurchförderung der konzentrierten Bestandteile unter Druck.

56. Stall nach Anspruch 55,
dadurch **gekennzeichnet**, daß das Rohr durch ein feinmaschiges Siebmedium gebildet ist, das wahlweise mit einem es umschließenden Metallgitter verstärkt ist, oder aus Metallgewebe oder aus einem für einen Feuerwehrschlauch geeigneten Material, wobei der Schlauch mit Perforationen versehen ist.

57. Stall nach Anspruch 55 oder 56,
dadurch **gekennzeichnet**, daß die konzentrierten Bestandteile durch eine Pelletisierungspresse verarbeitet werden, die in ein Trocknungs-Förderband mündet, das vorzugsweise an Lufteinstromöffnungen in dem Stallgebäude entlangläuft.

58. Stall nach Anspruch 57,
dadurch **gekennzeichnet,** daß die Pelletisierungspresse ein Gehäuse aufweist, in dem ein Durchförderer angeordnet ist, wie z.B. eine Förderschnecke, die das Material durch Öffnungen preßt, die in einer Scheibe angeordnet sind und die Ausmaße der gewünschten Pellets haben, wobei ein von der Förderschnecke angetriebenes Schneidmesser gegen die Scheibe angepreßt ist.

59. Stall nach einem der Ansprüche 52 bis 54 und 57, 58,
dadurch **gekennzeichnet,** daß Mittel vorgesehen sind zum Entfernen von konzentrierten Dungbestandteilen, Fördermittel zum Führen der konzentrierten Dungbestandteile zu einem Trocknungs-Förderband, welches vorzugsweise an Lufteinströmöffnungen in dem Stallgebäude entlangläuft, daß die vorgestrockneten Bestandteile zu Pellets verarbeitet werden durch eine Pelletisierungspresse, vorzugsweise die Pelletisierungspresse gemäß Anspruch 58, und daß die Pellets für die endgültige Trocknung über ein weiteres Trocknungs-Förderband abgefördert werden, welches vorzugsweise an Lufteinströmöffnungen in dem Stallgebäude entlangläuft.

60. Stall nach einem der Ansprüche 48 bis 59,
dadurch **gekennzeichnet,** daß der Antrieb der Pumpe mittels eines Wärmemotors erfolgt, vorzugsweise ein Gasmotor oder eine Gasturbine, wobei die Kühlungswärme und/oder die Wärme der Auspuffgase zum Aufrechterhalten einer gewünschten Temperatur der Waschflüssigkeit genutzt werden kann.

## Revendications

1. Procédé pour traiter l'air d'évacuation d'un local pour animaux et de traitement d'un liquide de lavage, dont une partie au moins est placée dans un espace de collecte du fumier (4), lequel est placé sous un box (2) dans une ou plusieurs zones de logement des animaux et communique avec ce box à travers une grille (34) montée dans le plancher (47) du box (2) en faisant passer l'air d'évacuation de la ou des zones de logement à travers une plage de pulvérisation d'un liquide de lavage, laquelle plage de pulvérisation est située à l'extérieur du box (2) pour animaux, afin d'épurer l'air d'évacuation au moyen du liquide de lavage (35) et aussi d'aérer et d'enrichir en oxygène le liquide de lavage (35), après quoi une partie au moins de l'air épuré est transportée vers l'extérieur et une partie au moins du liquide de lavage enrichi en oxygène est transportée à travers l'espace de collecte du fumier (4).

2. Local pour animaux, par exemple pour des porcs, comprenant au moins une zone de logement avec au moins un box (2) pour animaux, lequel box communique au moyen d'une grille (34) montée dans le plancher (47) du box (2) avec un espace de collecte du fumier (4), lequel contient une couche de liquide de lavage (35), caractérisé par des moyens pour faire passer l'air d'évacuation provenant de la ou des zones de logement qui a déjà traversé le box (2) à travers une plage de pulvérisation créée par des moyens de pulvérisation du liquide de lavage (35), lesquels moyens de pulvérisation sont placés à l'extérieur du box (2), des moyens pour transporter au moins une partie de l'air, qui a traversé la plage de pulvérisation, vers l'extérieur et des moyens pour transporter au moins une partie du liquide de lavage pulvérisé (35) à travers l'espace de collecte du fumier (4).

3. Local pour animaux selon la revendication 2, caractérisé en ce que les moyens de pulvérisation comprennent un certain nombre de dispositifs de pulvérisation (36) reliés en série l'un à l'autre.

4. Local pour animaux selon l'une quelconque des revendications précédentes, caractérisé en ce que sont prévus des moyens pour évacuer l'air à l'extérieur du local et des moyens pour amener de l'air frais au local.

5. Local pour animaux selon l'une ou plusieurs des revendications 2 à 4, caractérisé en ce que, à l'intérieur du local, un ou plusieurs dispositifs de pulvérisation (36) sont présents dans l'espace de collecte du fumier (4), plus bas que la grille (34) mais au-dessus du liquide de lavage (35), lequel ou lesquels dispositifs de pulvérisation (36) couvrent une plage de vaporisation dans l'espace de collecte du fumier (4) au-dessus d'une partie substantielle de la surface de l'espace de collecte du fumier (4), de préférence sur pratiquement toute sa surface.

6. Local pour animaux selon la revendication 5, caractérisé en ce qu'une partie de la grille (34) est couverte d'un matelas en matière mince tel qu'un matelas de caoutchouc, lequel peut être chauffé par l'air d'évacuation circulant sous le matelas.

7. Local pour animaux selon l'une quelconque des revendications 2 à 6, caractérisé en ce qu'un dispositif de pulvérisation au moins (50) du liquide de lavage (35) est monté dans un espace d'évacuation d'air, lequel est relié à la zone de logement des animaux et de préférence à l'espace de collecte du fumier (4).

8. Local pour animaux selon la revendication 7, caractérisé en ce que le liquide de lavage pulvérisé (35) constitue aussi une source de liquide de lavage (35) pour l'espace de collecte du fumier (4).

9. Local pour animaux selon la revendication 7 ou 8, dans lequel au moins une zone de logement d'un certain nombre de boxes est reliée à un passage de service, caractérisé en ce que l'espace d'évacuation d'air est situé au moins en partie sous le passage de service (38).

10. Local pour animaux selon la revendication 7 ou 8, caractérisé en ce que l'espace d'évacuation de l'air est situé dans un espace se trouvant à l'extérieur du local pour animaux relié à la zone de logement.

11. Local pour animaux selon la revendication 7 ou 8, dans lequel un certain nombre de zones de logement placées adjacentes pour recevoir des animaux sont connectées à une allée principale collective, caractérisé en ce que l'espace d'évacuation d'air est placé dans ou sous l'allée principale.

12. Local pour animaux selon une ou plusieurs des revendications 5 à 11, caractérisé en ce que des moyens sont prévus, par exemple une installation d'échappement, pour faire passer l'air à travers le liquide de lavage (35) provenant d'un ou plusieurs dispositifs de pulvérisation installés dans l'espace de collecte du fumier (4) et pour transporter ensuite l'air à travers le liquide de lavage (35) sortant d'un ou plusieurs dispositifs de pulvérisation montés dans un ou plusieurs des espaces reliés d'évacuation d'air.

13. Local pour animaux selon l'une quelconque des revendications 4 à 12, caractérisé en ce que l'amenée d'air passe par un système de tuyaux (21) et l'évacuation de l'air passe par un espace (22) entourant les tuyaux, dans lequel l'air amené et l'air évacué sont de préférence acheminés dans des sens opposés.

14. Local pour animaux selon l'une quelconque des revendications 4 à 12, caractérisé en ce qu'un système de tunnels ou un tunnel installé dans le sol sert au passage de l'air amené.

15. Local pour animaux selon la revendication 13 ou 14, caractérisé en ce que le système de tuyaux est placé dans un ou plusieurs espaces d'évacuation d'air selon les revendications 9 à 11 et en option sous la grille (34).

16. Local pour animaux selon la revendication 13, 14 ou 15, caractérisé en ce qu'un ou plusieurs dispositifs de pulvérisation (50) du liquide de lavage (35) sont installés dans l'espace entourant les tuyaux (21) de préférence au-dessus des tuyaux.

17. Local pour animaux selon l'une quelconque des revendications 4 à 16, caractérisé en ce que l'air amené et/ou l'air évacué sont aussi transportés à travers au moins un échangeur thermique (46).

18. Local pour animaux selon une ou plusieurs des revendications 2 à 17, caractérisé en ce que des moyens sont prévus pour amener le liquide de lavage (35) au ou aux dispositifs de pulvérisation selon un procédé sensiblement continu.

19. Local pour animaux selon l'une quelconque des revendications précédentes, caractérisé en ce que le liquide de lavage (35) est obtenu au moins partiellement et de préférence presque totalement en utilisant des moyens pour séparer la fraction liquide du fumier produit par les animaux et pour soumettre la fraction liquide séparée à un procédé d'enrichissement en oxygène.

20. Local pour animaux selon une ou plusieurs des revendications précédentes, caractérisé en ce que des moyens de circulation du liquide de lavage (35) sont installés, lesquels délivrent le liquide de lavage dans un circuit comprenant au moins un espace de collecte (57) du fumier et évacuent le liquide de lavage présent vers un dispositif d'enrichissement en oxygène, et lesquels ramènent le liquide de lavage traité dans ce dispositif vers un espace de collecte correspondant (4).

21. Local pour animaux selon l'une quelconque des revendications précédentes, caractérisé en ce que les moyens de circulation font circuler le liquide de lavage (35) dans un circuit de manière sensiblement continue.

22. Local pour animaux selon les revendications 20 et/ou 21, caractérisé en ce que le ou les espaces de collecte sont formés par au moins un espace de collecte du fumier communiquant avec un box (2).

23. Local pour animaux selon une ou plusieurs des revendications 20 à 22, caractérisé en ce qu'un espace de collecte (57) du fumier forme une partie d'un dispositif de séparation pour enlever et/ou filtrer des constituants solides entraînés avec le liquide de lavage (35).

24. Local pour animaux selon une ou plusieurs des revendications 20 à 22, caractérisé en ce qu'un dispositif de séparation selon la revendication 24 est incorporé au trajet du liquide de lavage avant qu'il arrive au dispositif d'enrichissement en oxygène.

25. Local pour animaux selon l'une quelconque des revendications 20 à 24, caractérisé en ce qu'au moins un dispositif de pulvérisation est incorporé dans le passage de circulation, lequel dispositif de pulvérisation constitue aussi le moyen pour amener l'air en contact intime avec le liquide de lavage (35) selon une ou plusieurs des revendications 2 à 19.

26. Local pour animaux selon une ou plusieurs des revendications 2 à 25, caractérisé en ce que les moyens de circulation entraînent le liquide de lavage (35) sur ou à travers au moins une partie substantielle d'au moins un espace de collecte (4).

27. Local pour animaux selon une ou plusieurs des revendications 2 à 26, caractérisé en ce que les moyens de circulation comprennent des moyens, par exemple un tropplein, pour évacuer sensiblement la couche supérieure seulement du liquide de lavage (35) et le fumier présent dans l'espace de collecte du fumier (4).

28. Local pour animaux selon une ou plusieurs des revendications 2 à 27, caractérisé en ce que l'amenée du liquide de lavage (35) à l'espace de collecte du fumier (4) se fait au moyen d'un conduit ayant les ouvertures de sortie qui sont placées dans une couche contenant du liquide de lavage (35) dans l'espace de collecte du fumier (4).

29. Local pour animaux selon une ou plusieurs des revendications 2 à 27, caractérisé en ce que l'amenée se fait au moyen d'un dispositif de pulvérisation.

30. Local pour animaux selon une ou plusieurs des revendications 2 à 29, caractérisé en ce que l'amenée se fait en évacuant le liquide de lavage (35) depuis une autre partie du circuit vers un espace de collecte du fumier (4).

31. Local pour animaux selon une ou plusieurs des revendications 2 à 29, caractérisé en ce que des moyens sont installés pour laver ou aspirer périodiquement au moins une grande partie du fumier déposé sous-jacent et l'amener au dispositif de séparation.

32. Local pour animaux selon une ou plusieurs des revendications 21 à 25, caractérisé en ce que les moyens de circulation font circuler le liquide de lavage (35) dans l'espace de collecte du fumier (4) de manière que pratiquement tous les constituants solides en soient évacués.

33. Local pour animaux selon la revendication 32, caractérisé en ce que les espaces de collecte du fumier des box successifs pour animaux d'au moins une ou plusieurs zones de logement placées adjacentes sont mutuellement connectés à un canal continu, et en ce qu'une évacuation collective du liquide de lavage (35) et des constituants du fumier est prévue pour relier les espaces de collecte du fumier au moins d'un côté du canal, et de préférence aux deux extrémités extérieures du canal, auquel cas le premier conduit d'évacuation et le second conduit d'évacuation sont ouverts alternativement.

34. Local pour animaux selon une ou plusieurs des revendications précédentes, caractérisé en ce que des moyens sont prévus pour activer le liquide de lavage (35), lesquels moyens amènent le liquide de lavage dans un circuit suivi par le liquide de lavage jusqu'à un dispositif d'enrichissement en oxygène comme un dispositif d'aération, et vers d'autres moyens d'activation qui stimulent l'activité de micro-organismes pour dégrader les substances nuisibles provenant du fumier, telles que l'ammoniac.

35. Local pour animaux selon la revendication 34, caractérisé en ce que les autres moyens d'activation consistent à amener le liquide de lavage en contact avec une source de micro-organismes comme une boue active, présente dans le circuit de liquide de lavage et de préférence dans le ou les espaces de collecte du fumier.

36. Local pour animaux selon les revendications 34 et/ou 35, caractérisé en ce que les moyens d'activation comprennent au moins un substrat, de préférence un substrat de surface relativement grande, tel qu'un bio-bloc, servant d'environnement de croissance des micro-organismes dans le circuit suivi par le liquide de lavage.

37. Local pour animaux selon une ou plusieurs des revendications 34 à 36, caractérisé en ce que les moyens d'activation stimulent l'activité des bactéries nitrifiantes.

38. Local pour animaux selon une ou plusieurs des revendications 34 à 37, caractérisé en ce que le dispositif d'aération comprend les autres moyens d'activation sous la forme d'un substrat disposé à l'intérieur, de préférence en forme d'un bio-bloc.

39. Local pour animaux selon une ou plusieurs des revendications 2 à 38, caractérisé en ce que lesdits moyens sont agencés de préférence en forme d'un substrat dans un espace à l'intérieur duquel un dispositif de pulvérisation du liquide de lavage au moins est placé, comme par exemple un espace d'évacuation d'air.

40. Local pour animaux selon la revendication 39, caractérisé en ce que l'espace (22) entourant un système de tuyaux (21) dans lequel est placé au moins un dispositif de pulvérisation (50), contient une couche de bactéries nitrifiantes au moins sur les tuyaux.

41. Local pour animaux selon une ou plusieurs des revendications 34 à 40, caractérisé en ce que le circuit de liquide de lavage comprend au moins un espace de collecte pour l'amenée et l'évacuation du fumier produit par les animaux dans lequel un liquide de lavage est contenu, de préférence l'espace de collecte du fumier et/ou un dispositif de séparation.

42. Local pour animaux selon une ou plusieurs des revendications précédentes, caractérisé en ce que des moyens d'activation sont présents pour renforcer l'activité des bactéries dénitrifiantes.

43. Local pour animaux selon une ou plusieurs des revendications 34 à 41, caractérisé en ce que le système de circulation du liquide de lavage contient au moins une zone anaérobie préservée pour des bactéries dénitrifiantes, de préférence dans un espace de collecte du fumier (4).

44. Local pour animaux selon une ou plusieurs des revendications 34 à 43, caractérisé en ce que la nitrification est stimulée en faisant circuler le liquide de lavage selon un procédé sensiblement continu dans un circuit contenant un dispositif d'aération et éventuellement un espace de collecte du fumier.

45. Local pour animaux selon une ou plusieurs des revendications 34 à 42, caractérisé en ce que les moyens de circulation sont prévus pour faire circuler le liquide de lavage dans un procédé sensiblement continu dans un circuit, en utilisant de préférence le système de circulation selon une ou plusieurs des revendications 21 à 33.

46. Local pour animaux selon les revendications 18, 21 et 45, caractérisé en ce qu'au moins deux, et de préférence trois, des moyens mentionnés ici, sont employés simultanément dans un procédé pratiquement continu.

47. Local pour animaux selon l'une quelconque des revendications 19 à 46, caractérisé en ce que l'installation d'enrichissement en oxygène est formée par un dispositif d'aération, de préférence placé dans le local pour animaux.

48. Local pour animaux selon la revendication 47, caractérisé en ce que le dispositif d'aération est constitué par une pompe qui applique un mélange liquide/air à une tour d'aération (65).

49. Local pour animaux selon une ou plusieurs des revendications 47 et 48, caractérisé en ce que la tour d'aération (65) comprend un certain nombre de compartiments fermés allongés connectés en série, de préférence au moins trois compartiments, ayant chacun, près de leur partie inférieure, une entrée de liquide, et près de leur côté supérieur, une sortie de liquide, dans lequel l'entrée de liquide d'au moins le premier compartiment est équipée de moyens pour mélanger de l'air dans le liquide.

50. Local pour animaux selon une ou plusieurs des revendications 47 à 49, caractérisé en ce que le liquide et l'air sont mélangés au moyen d'une pompe, dans lequel le tuyau d'amenée du liquide à la pompe comporte en amont du côté aspiration de la pompe une entrée d'air, et dans lequel une vanne de commande du liquide est de préférence montée dans le tuyau d'amenée du liquide en amont de l'entrée d'air.

51. Local pour animaux selon une ou plusieurs des revendications 47 à 50, caractérisé en ce que le dispositif d'aération contient des bio-blocs formant un réseau de grande surface, par exemple en matière plastique, sur lequel des micro-organismes peuvent se déposer pour activer le liquide de lavage aéré.

52. Local pour animaux selon l'une quelconque des revendications précédentes, caractérisé en ce qu'une installation de traitement du fumier est installée de préférence à l'intérieur ou en option près du local pour animaux.

53. Local pour animaux selon l'une quelconque des revendications précédentes, caractérisé en ce qu'un dispositif de séparation est prévu, lequel comprend une cuve de collecte du fumier ayant au moins deux compartiments effectivement séparés l'un de l'autre par un convoyeur à bande incliné placé partiellement sous la surface du liquide et équipé de moyens de filtrage tels qu'une plaque ou un grillage de filtrage pour retirer les constituants solides du fumier du premier compartiment et permettre à la fraction liquide de pénétrer dans l'autre compartiment à travers le filtre, et en ce que des moyens sont prévus pour retirer les constituants solides du fumier du convoyeur à bande.

54. Local pour animaux selon la revendication 53, caractérisé en ce qu'au-dessus de la partie du moyen de filtre dépassant plus haut que la surface de liquide, des moyens sont agencés pour retirer l'excès de liquide des constituants du fumier filtrés, lesquels moyens sont de préférence constitués par un ventilateur.

55. Local pour animaux selon l'une quelconque des revendications 52 à 54, caractérisé en ce que des moyens sont installés pour retirer des constituants concentrés du fumier, par exemple un grattoir, lesquels constituants concentrés du fumier sont amenés à un élément extracteur d'humidité pour réduire encore la teneur en humidité, par exemple un tube dont la paroi comporte des ouvertures que seule l'humidité peut traverser et dans lequel des moyens sont prévus pour traverser sous pression les constituants concentrés.

56. Local pour animaux selon la revendication 55, caractérisé en ce que le tube est constitué d'une plaque de grillage fin servant de filtre, éventuellement renforcée par un grillage métallique entourant cette plaque, ou en grillage métallique tissé ou en une matière utilisable pour une gaine d'incendie, laquelle gaine comporte des perforations.

57. Local pour animaux selon la revendication 55 ou 56, caractérisé en ce que les constituants concentrés sont traités dans une presse à granules qui débouche sur un convoyeur à bande de séchage, lequel circule de préférence le long d'ouvertures d'arrivée d'air dans le bâtiment de ferme.

58. Local pour animaux selon la revendication 57, caractérisé en ce que la presse à granules comprend un coffrage à l'intérieur duquel se trouve un élément d'alimentation traversant, tel qu'un convoyeur à vis, qui comprime la matière à travers des ouvertures prévues dans un disque et ayant la dimension des granules souhaités, avec une lame tranchante comprimée contre le disque entraînée en rotation par le convoyeur à vis.

59. Local pour animaux selon l'une quelconque des revendications 52 à 54 et 57, 58, caractérisé en ce qu'il comprend des moyens pour retirer des constituants concentrés du fumier, des moyens d'avance pour guider les constituants concentrés du fumier vers un convoyeur à bande de séchage, lequel circule de préférence le long des ouvertures d'entrée d'air dans le bâtiment de ferme, en ce que les constituants pré-séchés sont transformés en granules par une presse a granules, de préférence la presse à granules selon la revendication 58, et en ce que les granules sont entraînés sur un autre convoyeur à bande de séchage circulant de préférence devant des ouvertures d'entrée d'air dans le bâtiment de ferme pour effectuer un séchage final.

60. Local pour animaux selon l'une quelconque des revendications 48 à 59, caractérisé en ce que la pompe est entraînée au moyen d'un moteur thermique, de préférence un moteur à gaz ou une turbine à gaz, dans lequel la chaleur provenant du refroidissement et/ou la chaleur des gaz d'échappement peut être utilisée pour maintenir une température souhaitée du liquide de lavage.
